# EUROPÄISCHE PATENTSCHRIFT

(11) **EP 3 715 287 B1**
(45) Veröffentlichungstag und Bekanntmachung des Hinweises auf die Patenterteilung: **26.04.2023**
(21) Anmeldenummer: 20166023.0
(22) Anmeldetag: 26.03.2020
(51) Int. Cl.: B65G 15/50, B65G 21/10, B65G 43/08, B65G 47/64

(54) **VORRICHTUNG ZUM FÖRDERN VON PRODUKTEN**
DEVICE FOR TRANSPORTING PRODUCTS
DISPOSITIF DE TRANSPORT DE PRODUITS

(30) Priorität: 28.03.2019 DE 102019108126
(43) Veröffentlichungstag der Anmeldung: 30.09.2020
(73) Patentinhaber: Weber Maschinenbau GmbH Breidenbach, 35236 Breidenbach (DE)
(72) Erfinder: Schröder, Jens, 17036 Neubrandenburg (DE)
(74) Vertreter: Manitz Finsterwald Patent- und Rechtsanwaltspartnerschaft mbB

(56) Entgegenhaltungen:
- DE-A1-102008 007 768
- DE-A1-102014 118 978
- DE-U1- 29 612 787
- US-A- 6 152 284

## Beschreibung

Die Erfindung betrifft eine Vorrichtung zum ein- oder mehrspurigen Fördern von Objekten entlang einer sich in einer Förderrichtung erstreckenden Förderstrecke, wobei die Förderstrecke für zumindest eine Spur wenigstens eine Fördereinrichtung umfasst, die Objekte eingangsseitig von einer vorgeschalteten Funktionseinheit übernimmt und die Objekte ausgangsseitig an eine nachgeschaltete Funktionseinheit übergibt.

Die Erfindung betrifft außerdem ein Verfahren zum Handhaben von Objekten entlang einer Arbeitsstrecke, die eine derartige Vorrichtung umfasst, sowie die Verwendung einer oder mehrerer Verstelleinrichtungen zum Verstellen zumindest einer Fördereinrichtung, mit der Objekte entlang einer sich in Förderrichtung erstreckenden, ein- oder mehrspurigen Förderstrecke gefördert und insbesondere an eine zumindest teilweise der Förderstrecke nachgelagerte Verpackungsmaschine übergeben werden, quer zur Förderrichtung.

Derartige Vorrichtungen können insbesondere dazu verwendet werden, Portionen von Lebensmittelprodukten, die im Schneidbereich einer Aufschneidevorrichtung, insbesondere eines Hochgeschwindigkeitsslicers, in Scheiben geschnitten werden, zu einer nachgelagerten Verpackungsmaschine, beispielsweise einer Tiefziehverpackungsmaschine, zu fördern und dort in dafür vorgesehene Vertiefungen oder auf sonstige Verpackungsplätze, beispielsweise auf definierte Plätze einer von der Verpackungsmaschine vorgezogenen Materialbahn, ein- bzw. aufzulegen. Die Förderstrecke kann dabei mehrere dem Fördern der Objekte dienende Einheiten, beispielsweise zum Puffern der Objekte, zum Sortieren, zum Wiegen oder zum Bilden sogenannter Formatsätze, umfassen. Durch die Verbindung eines Hochgeschwindigkeitsslicer mit einer Verpackungsmaschine über eine derartige Förderstrecke lassen sich somit Arbeitsstrecken realisieren, entlang der durch die zugehörigen Einheiten alle notwendigen Schritte vom Aufschneiden der Produkte bis zum fertig verpackten Endprodukt in einer Gesamtanlage durchgeführt werden können.

Bei derartigen Vorrichtungen und Verfahren ist man generell bestrebt, den Produktdurchsatz und die Flexibilität zu erhöhen. So können als Hochgeschwindigkeitsslicer bezeichnete Schneidvorrichtungen stangen- oder laibförmige Lebensmittelprodukte mit hohen Schneidgeschwindigkeiten von mehreren Hundert bis einigen Tausend Scheiben pro Minute verarbeiten und zur weiteren Handhabung bereitstellen. In vielen Anwendungen werden aus den abgetrennten Scheiben, z.B. auf einem Portionierband, gestapelte oder geschindelte Portionen gebildet, die dann über eine Förderstrecke transportiert werden, um zu einer nachgelagerten Verpackungsmaschine geführt und dort an vorgesehene Verpackungsplätze übergeben zu werden. Das Portionierband wird typischerweise als Bestandteil des Hochgeschwindigkeitsslicers verstanden und ist somit Teil einer der Förderstrecke vorgelagerten Funktionseinheit.

Die Verpackungsmaschine einer solchen Arbeitsstrecke kann beispielsweise als Tiefziehverpackungsmaschine ausgebildet sein, die eine Formstation umfasst, in der in eine innerhalb der Maschine vorgezogene Materialbahn Vertiefungen zum Einlegen der über die Förderstrecke zugeführten Lebensmittelportionen eingebracht werden. Die Materialbahn und somit die Vertiefungen können beispielsweise unterhalb der Förderstrecke und typischerweise intermittierend transportiert werden, wobei der Transport der Lebensmittelportionen auf der Förderstrecke mit dem Transport der Vertiefungen synchronisiert wird, sodass die Lebensmittelportionen von der in Bezug auf die Förderrichtung letzten und häufig als Einleger bezeichneten Einheit der Förderstrecke direkt und präzise in die Vertiefungen eingelegt werden. Alternativ kann in der Verpackungsmaschine beispielsweise eine Materialbahn transportiert werden, ohne dass Vertiefungen in diese eingebracht werden, wobei die Lebensmittelportionen lediglich auf vorgegebene Verpackungsplätze der Materialbahn aufgelegt werden.

In der Folge können die mit Lebensmittelportionen gefüllten Vertiefungen bzw. die auf die vorgesehenen Verpackungsplätze aufgelegten Lebensmittelportionen in eine der Verpackungsmaschine zugehörige Siegelstation geführt werden, wo die Vertiefungen oder die Portionen mit einer, insbesondere einer von oberhalb zugeführten, Oberfolie vakuumdicht versiegelt werden. Weiterhin enthalten derartige Verpackungsmaschinen meist eine oder mehrere Schneidstationen, an denen die die Lebensmittelportionen enthaltenden Verpackungen voneinander getrennt werden, sodass die Portionen letztlich in separaten Verpackungen vorliegen und ausgeliefert werden können.

Im Zuge einer Optimierung des Produktdurchsatzes ist es möglich, Hochgeschwindigkeitsslicer mehrspurig zu betreiben, indem mehrere Produkte gegebenenfalls unterschiedlicher Sorte gleichzeitig aufgeschnitten werden. Es ist daher auch bekannt, im Bereich der Förderstrecke eine Einrichtung vorzusehen, die dazu ausgebildet ist, aus den abgetrennten Scheiben bzw. Portionen sogenannte Formatsätze zu bilden, die jeweils eine matrixähnliche Anordnung von Scheiben bzw. Portionen umfassen und im Hinblick auf die Anforderungen einer nachgelagerten Verpackungsmaschine gebildet werden. Mittels dieser Einrichtungen kann die Anzahl der Spuren, in denen die Lebensmittelportionen zur Verpackungsmaschine geführt werden, verändert und an die Anzahl von gleichzeitig von der Verpackungsmaschine transportierten Verpackungsplätzen angepasst werden.

Bekannte Funktionseinheiten, die der Förderstrecke oder einer jeweiligen Fördereinrichtung der Förderstrecke vor- bzw. nachgeschaltet sind, also insbesondere Hochgeschwindigkeitsslicer und Verpackungsmaschinen, aber auch andere Fördereinrichtungen, sind bereits derart ausgelegt, dass ein zufriedenstellender Produktdurchsatz bei relativ hoher Flexibilität, einschließlich eines Verteilens von Produkten auf unterschiedliche Spuren bei einem Mehrspurbetrieb, erreicht werden kann. Beispielsweise zeigt DE 10 2014 118 978 A1 ein System mit einer Fördereinrichtung zum Bewegen von Portionen, bei welchem eine Transfereinrichtung zum Transferieren der Portionen von der Fördereinrichtung zu einer Verpackungsvorrichtung vorgesehen ist. Dabei umfasst die Fördereinrichtung eine Mehrzahl von Transportmovern, welche in einem Bahnsystem entlang wenigstens einer vorgegebenen Bahn bewegbar sind und welche jeweils einen Träger für Portionen umfassen, während die Transfereinrichtung dazu ausgebildet ist, aus mehreren Portionen unterschiedlicher Transportmover einen ein- oder mehrzeiligen Formatsatz zu bilden und diesen als Ganzes an die Verpackungsvorrichtung zu transferieren.

Ferner zeigt DE 296 12 787 U1 eine Vorrichtung zum Verändern der Zahl der Ströme, in welchen Lebensmittelprodukte transportiert und einer Verpackungsmaschine zugeführt werden. US 6,152,284 A beschreibt ein Fördersystem für Lebensmittelprodukte, um diese in einem Formatsatz an eine Verpackungsmaschine übergeben zu können. In DE 10 2008 007 768 A1 ist eine Vorrichtung zum Weiterbewegen von Stückgut offfenbart, wobei Produkte von einer Fördereinrichtung an eine quer zu der Fördereinrichtung bewegbare Transporteinrichtung abgegeben werden.

Jedoch können kleine Ungenauigkeiten beim Schneidvorgang, beispielsweise bei der Formatsatzbildung, während des Förderns der Lebensmittel, in der Anordnung der Vertiefungen in der Verpackungsmaschine oder bei sonstigen Schritten der Verarbeitung oder des Betriebs dazu führen, dass die Lebensmittelportionen nicht exakt in die Vertiefungen bzw. auf die Verpackungsplätze der Verpackungsmaschine verbracht werden können. Daher ist es bei derzeitigen Vorrichtungen meist notwendig, die Lage der Lebensmittelportionen in den Vertiefungen oder den fertigen Verpackungen von Hand zu kontrollieren, was einen erheblichen Personalaufwand bedingt sowie gegebenenfalls einen unangemessenen Produktausschuss zur Folge hat. Weiterhin sorgen mangelhaft platzierte Portionen häufig für Störungen des Betriebs, da dieser zeitweise gestoppt werden muss, um den Fehler zu bestimmen und Korrekturen an den Vorrichtungen vorzunehmen.

Aufgabe der Erfindung ist es daher, eine Vorrichtung zum Fördern von Objekten entlang einer Förderstrecke derart weiterzubilden, dass die Objekte in möglichst exakt positionierter Weise an einen Ausgangsbereich, insbesondere eine Verpackungsmaschine oder eine nachgeschaltete Fördereinrichtung, weitergegeben werden können.

Die Lösung dieser Aufgabe erfolgt durch eine Vorrichtung mit den Merkmalen des Anspruchs 1.

Bei der erfindungsgemäßen Vorrichtung ist es vorgesehen, dass die Fördereinrichtung als Ganzes und/oder in einem ausgangsseitigen Endbereich mittels einer Verstelleinrichtung quer zur Förderrichtung derart verstellbar ist, dass die Querposition von zu übergebenden Objekten innerhalb der jeweiligen Spur verändert wird.

Erfindungsgemäß können mit der Verstelleinrichtung geringfügige und punktgenaue Querverstellungen um weniger als die Breite der Spur vorgenommen werden. Dies ermöglicht folglich eine Korrektur der Lage von Objekten in der jeweiligen Spur, die in einer der Fördereinrichtung nachgeschalteten und der Förderstrecke zugehörigen Funktionseinheit oder einer der Förderstrecke nachgeschalteten Funktionseinheit in derselben Spur fortgeführt werden. Eine derartige Korrektur der Objekte innerhalb der Spur, die eine präzise Übergabe an eine nachgeschaltete Funktionseinheit, insbesondere ein präzises Ein- oder Auflegen auf Verpackungsplätze einer Verpackungsmaschine, erlaubt, ist bei bekannten Querverteilern, die beispielsweise zur Formatsatzbildung und damit zum Umverteilen der Objekte auf mehrere Spuren genutzt werden, nicht möglich.

Die Erfindung schließt nicht aus, dass die Fördereinrichtung auch dazu in der Lage ist, die Querposition der Objekte durch Verstellen in Querrichtung so zu ändern, dass eine Querverteilung der Objekte auf unterschiedliche Spuren im Sinne eines Spurwechsels erreicht wird. Diese - aus Sicht der Erfindung zusätzliche - Funktionalität kann vorzugsweise ebenfalls mittels der Verstelleinrichtung erreicht werden, d.h. die Fördereinrichtung kann in dieser bevorzugten Ausgestaltung der Erfindung wahlweise entweder innerhalb der jeweiligen Spur oder in einem größeren Ausmaß in Querrichtung verstellt werden, um die Objekte an eine unmittelbar benachbarte oder eine noch weiter in Querrichtung entfernte Spur zu übergeben.

Die Fördereinrichtung kann erfindungsgemäß für genau eine Spur vorgesehen sein, sodass mittels der Verstelleinrichtung die Querposition von Objekten dieser Spur verändert werden kann. Ferner können Objekte mehrerer Spuren mittels einer gemeinsamen Fördereinrichtung befördert werden, sodass dann mittels der Verstelleinrichtung die Querposition von Objekten aller der Fördereinrichtung zugehörigen Spuren, insbesondere innerhalb ihrer jeweiligen Spur, angepasst werden kann.

Bevorzugt ist die Verstelleinrichtung an einem ausgangsseitigen Ende der Fördereinrichtung angeordnet und die Verstellung der Fördereinrichtung wird an diesem ausgangsseitigen Ende vorgenommen. Somit können auch im verstellten Zustand weiterhin Objekte am eingangsseitigen Ende der Fördereinrichtung z.B. zentriert von einer vorgeschalteten Funktionseinheit aufgenommen werden. Bevorzugt erfolgt die ausgangsseitige Querverstellung, wenn sich keine Objekte im Bereich der Verstelleinrichtung befinden. Neben einer Verstellung der Fördereinrichtung am ausgangsseitigen Ende ist es auch möglich, die Fördereinrichtung als Ganzes zu verstellen, insbesondere nachdem Objekte z.B. zentral in Bezug auf die jeweilige Spur von einer vorgeschalteten Einheit aufgenommen wurden und sich bereits auf der Fördereinrichtung befinden.

Die Förderstrecke kann einen Teil einer Arbeitsstrecke bilden, auf der Objekte von einer der Arbeitsstrecke zugehörigen vorgeschalteten Funktionseinheit, insbesondere einer Aufschneidevorrichtung bzw. einem Hochgeschwindigkeitsslicer, zu einer der Arbeitsstrecke zugehörigen nachgeschalteten Funktionseinheit, insbesondere einer Verpackungsmaschine, gefördert werden. Die Förderstrecke kann somit selbst mehrere Einheiten umfassen, insbesondere zum Wiegen der Objekte, zu deren Sortieren oder zum Bilden von Formatsätzen und zum Puffern. Weiterhin kann die Förderstrecke einen Einleger umfassen, der dazu dient, die Objekte ausgangsseitig an eine nachgeschaltete Funktionseinheit zu übergeben und insbesondere die Objekte auf oder in vorgesehene Verpackungsplätze einer nachgelagerten Verpackungsmaschine zu legen. Die Förderstrecke umfasst demnach diejenigen Einheiten, die zum Fördern der Objekte von einer vorgeschalteten zu einer nachgeschalteten Einheit vorgesehen sind, während diese vorgeschalteten und nachgeschalteten Funktionseinheiten, insbesondere ein Hochgeschwindigkeitsslicer und eine Verpackungsmaschine, lediglich Bestandteile der übergeordneten Arbeitsstrecke darstellen.

Gemäß einem Ausführungsbeispiel ist die Förderstrecke mehrspurig und umfasst für jede Spur eine Fördereinrichtung, wobei die Fördereinrichtungen nebeneinander angeordnet und unabhängig voneinander in Querrichtung verstellbar sind. Dies erlaubt ein spurindividuelles Verstellen und somit ein spurindividuelles Verändern der Querpositionen von Objekten in den jeweiligen Spuren. Es ist dabei sowohl möglich, die Objekte spurindividuell in Querrichtung korrekt anzuordnen, also lediglich geringfügige Veränderungen vorzunehmen, sodass die Objekte nach ihrer Übergabe an eine nachgeschaltete Funktionseinheit in ihrer jeweiligen Spur weitergeführt werden, als auch einen Spurwechsel der Objekte vorzunehmen und so z.B. bestimmte Formatsätze zu bilden und/oder die Anzahl der Spuren zu erhöhen oder zu verringern. Ist die Spuranzahl auf der Förderstrecke ausgangsseitig von der Fördereinrichtung von der Spuranzahl auf der Fördereinrichtung verschieden, so wird die Spuranzahl in der Regel ausgangsseitig von der Fördereinrichtung erhöht, wobei es auch möglich ist, mittels der Querverstellung der Objekte eine Spurverringerung zu erzielen. Ferner ist es möglich, eine auf der Fördereinrichtung zwar vorgesehene, aber in der jeweiligen Betriebssituation nicht bediente Spur in eine äußere Parkposition zu verstellen, sodass für die weiteren, sich in Verwendung befindenden Spuren ein maximaler Bereich von Querverstellungen zugänglich ist.

Die Fördereinrichtung kann ein umlaufendes Endlosfördermittel umfassen, insbesondere ein relativ breiteres Endlosförderband oder eine Vielzahl von relativ schmaleren, nebeneinander angeordneten Endlosförderriemen, wobei mittels der Verstelleinrichtung eine ausgangsseitige Umlenkung für das Endlosfördermittel in Querrichtung verstellbar ist. Dabei können die Endlosfördermittel mehrerer Fördereinrichtungen über eine gemeinsame eingangsseitige Umlenkung umgelenkt werden, während sie bevorzugt gesonderte ausgangsseitige Umlenkungen aufweisen. Dies ermöglicht eine zumindest ausgangsseitige Trennung der Fördereinrichtungen und somit ein spurindividuelles Verstellen der jeweiligen Fördereinrichtung.

Gemäß einem weiteren Ausführungsbeispiel umfasst die Verstelleinrichtung ein bewegbares Element, das mit der Fördereinrichtung gekoppelt ist, insbesondere mit einer ausgangsseitigen Umlenkung eines Endlosfördermittels. Dabei kann die Förderstrecke mehrspurig ausgebildet und für jede Spur eine Fördereinrichtung vorgesehen sein, wobei die Verstelleinrichtung bevorzugt für jede Fördereinrichtung ein bewegbares Element umfasst und wobei die bewegbaren Elemente unabhängig voneinander bewegbar sind.

Gemäß einem Ausführungsbeispiel ist das bewegbare Element der Verstelleinrichtung als Läufer eines Linearmotors ausgebildet, insbesondere eines linearen Synchronmotors oder eines linearen Induktionsmotors. Bevorzugt ist der Läufer dabei von einem Permanentmagnet gebildet, während der Stator die Motorwicklungen zur Erzeugung wechselnder Magnetfelder zum Antrieb und zur Positionierung des Läufers sowie eine Lagerung für den Läufer umfassen kann. Alternativ kann es auch vorgesehen sein, dass der Stator einen oder mehrere Permanentmagnete umfasst und eine stabartige Führung für den Läufer, der die Mittel zur Erzeugung der antreibenden und positionierenden Magnetfelder trägt, bereitstellt. Es können jedoch auch andere Antriebe, wie beispielsweise Spindeltriebe oder sonstige Antriebe, vorgesehen sein, wobei das bewegbare Element der Verstelleinrichtung dann beispielsweise von einer Spindelmutter gebildet werden kann.

Ferner kann das bewegbare Element mittels eines Servomotors antreibbar sein und/oder einen Servomotor umfassen. Ein solcher Servomotor kann einen grundsätzlich beliebig ausgebildeten Elektromotor mit einem Rotor, beispielsweise einen Gleichstrommotor, einen Asynchronmotor oder einen Synchronmotor, aufweisen und umfasst insbesondere eine Messeinrichtung, welche es ermöglicht, jederzeit die genaue Position bzw. die Drehstellung und/oder den Drehwinkel des Rotors zu bestimmen. Dabei kann diese Positionsmessung beispielsweise über einen Drehgeber erfolgen, wozu insbesondere ein Resolver, ein Inkrementalgeber oder ein Absolutwertgeber vorgesehen sein kann. Der Servomotor kann mit einem Getriebe verbunden sein, um die Drehbewegung des Rotors in eine translatorische Bewegung des bewegbaren Elementes quer zu der Förderrichtung zu übersetzen. Insbesondere durch eine integrierte Messeinrichtung zum unmittelbaren Bestimmen der Drehstellung eines Rotors kann auch die Position eines mittels des Servomotors bewegbaren Elements schnell und präzise bestimmt werden, um gegebenenfalls erforderliche Korrekturen der Querposition von auf der Fördereinrichtung bewegten Objekten während des Betriebs flexibel durchführen zu können.

Beispielsweise kann es vorgesehen sein, dass das bewegbare Element als ein mit der Fördereinrichtung und insbesondere mit einem Endbereich eines Endlosfördermittels gekoppeltes Zahnrad ausgebildet ist, dessen Zähne mit einer Verzahnung einer quer zu der Förderrichtung ausgerichteten Zahnstange kämmen. Das Zahnrad kann dabei mittels eines Servomotors präzise antreibbar bzw. ansteuerbar sein, sodass die Drehstellung des Zahnrads exakt vorgegeben werden kann. Durch die kämmenden Verzahnungen des Zahnrads und der Zahnstange kann aus einer Rotationsbewegung des Zahnrads zum Verändern dessen Drehstellung eine translatorische Bewegungskomponente in Querrichtung abgeleitet werden, um die Position der mit dem Zahnrad gekoppelten Fördereinrichtung in Querrichtung zu verändern bzw. zu korrigieren.

Erfindungsgemäß umfasst die Verstelleinrichtung einen mit der Fördereinrichtung gekoppelten und gemeinsam mit der Fördereinrichtung in Querrichtung bewegbaren Servomotor zum Verstellen der Fördereinrichtung, wobei der Servomotor insbesondere mit einer ausgangsseitigen Umlenkung eines Endlosfördermittels gekoppelt sein kann. Der Servomotor kann dabei folglich unmittelbar mit der Fördereinrichtung verbunden und gemeinsam mit der Fördereinrichtung in Querrichtung bewegbar sein, um Korrekturen der Position der Fördereinrichtung vornehmen zu können. Auch dabei kann der Servomotor insbesondere ein in einer sich in Querrichtung erstreckenden Zahnstange umlaufendes Zahnrad antreiben, sodass eine Rotationsbewegung des Zahnrads durch die miteinander kämmenden Verzahnungen des Zahnrads und der Zahnstange in eine translatorische Bewegung des Servomotors in Querrichtung übersetzt werden kann. Entsprechend kann auch die mit dem Servomotor gekoppelte Fördereinrichtung in Querrichtung bewegt werden.

Insbesondere kann der Servomotor dabei mit einem Übertragungselement verbunden sein, welches Teil einer Kopplung zum Übertragen der Bewegung des Servomotors auf die Fördereinrichtung sein kann. Ein solches Übertragungselement kann beispielsweise schienen- bzw. wandartig und sich in Förderrichtung erstreckend ausgebildet sein, so dass das Übertragungselement eine Halterung für den Servomotor bilden oder mit einer solchen verbunden sein kann, um den Servomotor insbesondere unterhalb der Fördereinrichtung positionieren zu können.

Es kann vorgesehen sein, dass zwischen den Servomotor und die Fördereinrichtung, insbesondere einer ausgangsseitigen Umlenkung eines Endlosfördermittels, ein mittels des Servomotors beaufschlagbares Zahnstangengetriebe geschaltet ist. Das Zahnstangengetriebe kann dabei insbesondere dazu vorgesehen sein, ein durch den Servomotor in Rotation versetztes Zahnrad in Querrichtung zu bewegen, um Korrekturen der Querposition der Fördereinrichtung vornehmen zu können. Der Servomotor kann ferner selbst mit dem Zahnrad und der Fördereinrichtung gekoppelt sein, so dass der Servomotor gemeinsam mit einem solchen Zahnrad in Querrichtung bewegbar sein kann.

Ferner kann der Servomotor dazu ausgebildet sein, ein Verstellelement rotatorisch anzutreiben, wobei das Verstellelement in einer Führungseinrichtung geführt sein kann, welche dazu ausgebildet ist, eine Rotationsbewegung des Verstellelements in eine translatorische Bewegung des Servomotors und der damit gekoppelten Fördereinrichtung quer zu der Förderrichtung zu überführen. Insbesondere kann das Verstellelement als Zahnrad ausgebildet sein, welches mit einer Verzahnung einer sich quer zu der Förderrichtung erstreckenden Zahnstange kämmt. Alternativ kann es beispielsweise auch vorgesehen sein, dass der Servomotor ein in einer Führungsschiene umlaufendes Rad antreibt, wobei aus der Rotationsbewegung des Rades reibungsbedingt eine translatorische Bewegungskomponente abgeleitet werden kann.

Gemäß einem weiteren Ausführungsbeispiel ist die Förderstrecke mehrspurig und die Verstelleinrichtung umfasst für jede Spur einen Servomotor. Die Förderstrecke kann dabei für jede Spur eine Fördereinrichtung aufweisen, welche, insbesondere durch eine der vorstehend erläuterten Möglichkeiten, individuell und unabhängig von den anderen Fördereinrichtungen durch den jeweiligen Servomotor in Querrichtung bewegbar sein kann. Dadurch können beispielsweise Ungenauigkeiten der Querposition von zu übergebenden Objekten in jeder der mehreren Spuren unabhängig von den anderen Spuren korrigiert werden, sodass beispielsweise lediglich eine Spur betreffende Ablagefehler eines mehrspurig betriebenen Hochgeschwindigkeitsslicers in der jeweiligen Spur exakt korrigiert werden können, ohne den Betrieb in den anderen Spuren zu beeinflussen.

Gemäß einem Ausführungsbeispiel umfasst die Verstelleinrichtung einen Linearmotor mit einem Stator und einem mit der Fördereinrichtung gekoppelten Läufer. Insbesondere kann der Läufer dabei am ausgangsseitigen Ende der Fördereinrichtung positioniert sein, sodass bei der Übergabe der Objekte Bandübergänge ausgenutzt werden können, indem die Objekte korrekt positioniert an das nächste Band übergeben werden. Ebenfalls kann vorgesehen sein, den Läufer am eingangsseitigen Ende der Fördereinrichtung oder jeweils einen oder mehrere Läufer an beiden Enden der Fördereinrichtung anzuordnen.

Des Weiteren kann vorgesehen sein, dass die Förderstrecke mehrspurig ist und die Verstelleinrichtung für jede Spur einen Linearmotor umfasst.

Gemäß einem weiteren Ausführungsbeispiel kann vorgesehen sein, dass die Förderstrecke mehrspurig ist und die Verstelleinrichtung für alle Spuren einen gemeinsamen Linearmotor umfasst, der für jede Spur einen Läufer umfasst.

Der gemeinsame Linearmotor kann einen gemeinsamen Stator für alle Läufer umfassen, der sich in Querrichtung über alle Spuren hinweg erstreckt und an dem die jeweils einer der Spuren zugeordneten Läufer während ihrer jeweiligen Stellbewegung geführt sind. Eine derartige Führung der spurindividuellen Läufer in einem gemeinsamen Stator erlaubt eine besonders Platz sparende Ausbildung der Verstelleinrichtung. Durch das Verschieben der Läufer in einer gemeinsamen Ebene kann ein besonders einfaches Nachrüsten bereits bestehender Fördereinrichtungen erreicht werden. Insbesondere in Abhängigkeit der tatsächlich vorliegenden Platzverhältnisse kann es bei einigen Ausführungsbeispielen jedoch auch vorgesehen sein, dass die verschiebbaren Elemente der Verstelleinrichtung auf parallel versetzten Führungen, insbesondere Läuferstangen oder einzelnen Statoren, gelagert sind.

Gemäß einem bevorzugten Ausführungsbeispiel umfasst der gemeinsame Linearmotor für alle Läufer einen gemeinsamen Stator und ist derart ansteuerbar, dass die Läufer unabhängig voneinander entlang des Stators bewegbar sind. Dies erlaubt ein spurindividuelles Verstellen der Querposition von Objekten auf der Förderstrecke und minimiert den für die Verstelleinrichtung benötigten Platzbedarf.

Weiterhin kann eine Kontrolleinrichtung vorgesehen sein, die dazu ausgebildet ist, die Querposition von Objekten auf der Fördereinrichtung und/oder auf einer der Fördereinrichtung vorgeschalteten Funktionseinheit und/oder auf einer der Fördereinrichtung nachgeschalteten Funktionseinheit zu erfassen. Demnach wird mittels der Kontrolleinrichtung zumindest die Querposition der Objekte erfasst und als maßgebliches Kriterium für eine Querverstellung herangezogen. Die Kontrolleinrichtung kann jedoch auch dazu ausgebildet sein, neben der Querposition weitere Objekteigenschaften zu erfassen, insbesondere die Lage der Objekte, d.h. auch deren Längsposition, ihre Größe, die Qualität der Objekte oder deren Gewicht, wobei die Messwerte an der erfindungsgemäßen Vorrichtung oder an einer anderen Stelle der Arbeitsstrecke verarbeitet werden können.

Die Kontrolleinrichtung kann zumindest einen Sensor umfassen, der im Bereich der Fördereinrichtung oder im Bereich der Funktionseinheit angeordnet ist und Informationen über die Querposition der Objekte innerhalb der Spur ermittelt. Somit kann die Kontrolleinrichtung neben Mitteln zur Erfassung der Position der Objekte auch weitere Mittel, insbesondere zum Verarbeiten der übermittelten Position sowie zur Weitergabe dieser Position, enthalten.

Gemäß einem bevorzugten Ausführungsbeispiel umfasst die Kontrolleinrichtung, insbesondere als im Bereich der Fördereinrichtung oder der Funktionseinheit angeordneten Sensor, eine Bildaufnahmeeinrichtung, insbesondere ein Kamerasystem oder eine Scaneinrichtung, mittels der die Lage von Objekten innerhalb einer Spur und/oder simultan innerhalb mehrerer Spuren ermittelt werden kann. Dies erlaubt es, eine Vielzahl genauer Informationen über die Lage der Objekte zu ermitteln, sodass eine notwendige Verstellung möglichst genau bestimmt werden kann. Ferner können, wie oben erwähnt, aus den Bildaufnahmen auch weitere Merkmale, insbesondere hinsichtlich der Qualität der Objekte, gewonnen und von der Kontrolleinrichtung verarbeitet werden.

Es kann vorgesehen sein, dass die Kontrolleinrichtung mehrere Sensoren umfasst, die entlang der Förderstrecke verteilt angeordnet sind, um die Lage von Objekten an verschiedenen Orten zu ermitteln. Durch das Erfassen der Lage von Objekten an verschiedenen Orten ist es möglich, mehrere potentielle Fehlerquellen gleichzeitig zu überwachen und gegebenenfalls notwendige Korrekturen vorzunehmen.

Gemäß einem Ausführungsbeispiel ist eine Steuereinrichtung vorgesehen, die dazu ausgebildet ist, in Abhängigkeit von den mittels der Kontrolleinrichtung erfassten Querpositionen der Objekte die Fördereinrichtung mittels der Verstelleinrichtung in Querrichtung zu verstellen. Dabei kann vorgesehen sein, dass die Steuereinrichtung die Querverstellung automatisch vornimmt und eventuell notwendige Korrekturen bei laufendem Betrieb und ohne einen externen Eingriff erfolgen, sodass keine Unterbrechungen des Betriebs notwendig sind.

Des Weiteren kann die Steuereinrichtung dazu ausgebildet sein, die Fördergeschwindigkeit der Fördereinrichtung zu verändern, um die Längsposition der zu übergebenden Objekte zu korrigieren. Eine derartige Korrektur der Längspositionierung erlaubt insbesondere die Zeilen- und Formatbildung von Objekten. Ferner können somit auch Fehler in der Längsposition ausgeglichen werden, die beispielsweise durch ein ungleiches Fallen der Scheiben auf ein Portionierband nach dem Abschneiden am Slicer oder durch etwaige Differenzen der Wegstrecke entstehen können. Insbesondere ist es möglich, Lücken im Portionsstrom aufzufüllen, die sich in einer Spur durch ein vorzeitiges Ende des Aufschneidens in der jeweiligen Spur, wenn in dieser Spur lediglich ein im Vergleich zu den anderen Spuren kurzer Produktriegel aufgeschnitten wird, oder durch eventuell nach dem Wiegen ausgeschleuste Portionen ergeben können.

Die Erfindung betrifft ferner eine Vorrichtung zum Handhaben von Objekten entlang einer Arbeitsstrecke mit einer Vorrichtung nach einem der vorstehend beschriebenen Ausführungsbeispiele, deren die wenigstens eine Fördereinrichtung umfassende Förderstrecke einen Teil der Arbeitsstrecke bildet, mit einer Kontrolleinrichtung, die dazu ausgebildet ist, die Querposition von Objekten auf der Fördereinrichtung oder auf einer der Fördereinrichtung vorgeschalteten oder nachgeschalteten Funktionseinheit zu erfassen, und mit einer Steuereinrichtung, die dazu ausgebildet ist, bei einer Abweichung der erfassten Querposition von einer Soll-querposition die Fördereinrichtung in Querrichtung zu verstellen, um die Querposition von zu übergebenden Objekten innerhalb der jeweiligen Spur zu korrigieren.

Diese Vorrichtung stellt einen weiteren Aspekt der Erfindung dar, für den auch unabhängig Schutz beansprucht wird.

Die Vorrichtung umfasst demnach neben der Förderstrecke und deren zugehörigen Einheiten insbesondere auch eine der Förderstrecke nachgeschaltete Funktionseinheit, die beispielsweise als eine Verpackungsmaschine ausgebildet sein kann. Die Förderstrecke sowie die nachgeschaltete Funktionseinheit sind somit jeweils Bestandteil der Arbeitsstrecke, die auch eine der Förderstrecke vorgeschaltete Funktionseinheit, insbesondere einen Hochgeschwindigkeitsslicer, umfassen kann.

Bevorzugt werden die Objekte unmittelbar nach der Übergabe auf die Förderstrecke von der Kontrolleinrichtung erfasst und erforderlichenfalls wird die Fördereinrichtung gemäß der Lage der Objekte von der Steuereinrichtung in Querrichtung derart verstellt, dass die Objekte am ausgangsseitigen Ende der Fördereinrichtung von dieser in ihrer Sollquerposition übergeben werden.

Gemäß einem Ausführungsbeispiel umfasst die Arbeitsstrecke eine zumindest teilweise der Förderstrecke nachgelagerte Verpackungsmaschine, insbesondere eine Tiefziehverpackungsmaschine. Es kann dabei bevorzugt vorgesehen sein, die Lage der Objekte unmittelbar nach der Übergabe an die Verpackungsmaschine zu erfassen und mit der gewünschten Lage auf oder in vorgegebenen Verpackungsplätzen zu vergleichen, wobei die Steuereinrichtung bei einer erfassten Abweichung eine Querverstellung der Fördereinrichtung zur Korrektur der Lage nachfolgender zu übergebender Objekte vornimmt.

Es kann vorgesehen sein, dass die Fördereinrichtung oder eine der Fördereinrichtung nachgeschaltete Funktionseinheit, insbesondere ein Auflege- oder Einlegeband, dazu ausgebildet ist, die Objekte von der Förderstrecke aus an jeweils zugeordnete Verpackungsplätze der Verpackungsmaschine zu übergeben, insbesondere auf eine in der Verpackungsmaschine transportierte Materialbahn aufzulegen oder in Vertiefungen einer in der Verpackungsmaschine transportierten Materialbahn einzulegen. Die Möglichkeit eines präzisen Ein- oder Auflegens der Objekte in oder auf vorgesehene Verpackungsplätze innerhalb der Verpackungsmaschine stellt dabei einen besonderen Vorteil der Erfindung dar.

Gemäß einem Ausführungsbeispiel ist die Kontrolleinrichtung dazu ausgebildet, die Lage der Objekte an den Verpackungsplätzen und insbesondere relativ zu vorgegebenen Begrenzungen der Verpackungsplätze zu erfassen. Insbesondere wird demnach die Lage der Objekte auf der Materialbahn, wenn lediglich nicht von Vertiefungen gebildete Verpackungsplätze vorgesehen sind, oder in den Vertiefungen erfasst.

Die Erfindung betrifft ferner ein Verfahren nach Anspruch 13 zum Handhaben von Objekten entlang einer Arbeitsstrecke unter Verwendung einer Vorrichtung nach einem der vorstehend beschriebenen Ausführungsbeispiele, bei dem die Querposition von Objekten auf der Fördereinrichtung und/oder auf einer der Fördereinrichtung vorgeschalteten und/oder auf einer der Fördereinrichtung nachgeschalteten Funktionseinheit erfasst wird und bei einer Abweichung der erfassten Querposition von einer vorgegebenen oder einer vorgebbaren Sollquerposition die Fördereinrichtung in Querrichtung verstellt wird, um die Querposition der zu übergebenden Objekte innerhalb der jeweiligen Spur zu korrigieren.

Dieses Verfahren stellt einen weiteren Aspekt der Erfindung dar, für den auch unabhängig Schutz beansprucht wird.

Bevorzugt findet die Korrektur der Querposition dabei während des Betriebs statt.

Alternativ kann es auch vorgesehen sein, die Fördereinrichtung in Betriebspausen, insbesondere bei einem Chargenwechsel, auszurichten. Vorzugsweise wird die Verstellung der Fördereinrichtung in einem ausgangsseitigen Endbereich vorgenommen, insbesondere während sich kein Objekt in dem Bereich, an dem die Verstelleinrichtung angreift, befindet.

Die Steuereinrichtung kann dazu ausgebildet sein, bei der Korrektur der Querposition der Objekte eine Trendregelung durchzuführen. Wird z.B. ein kontinuierliches Abweichen vom Sollzustand der Querposition in eine Richtung festgestellt, so wird diesem Trend unter Verstellen der Fördereinrichtung bereits entgegengewirkt, auch wenn sich die kontinuierliche Abweichung noch nicht in einer Position der Objekte außerhalb eines vorgegebenen Toleranzbereichs niederschlägt. Möglicherweise entstehenden Fehlern kann somit bereits entgegengewirkt werden, bevor eine relevante Betriebsbeeinträchtigung vorliegt. Ferner ist es möglich, das Fördern der Objekte im laufenden Betrieb zu optimieren und somit für die gesamte Dauer des Betriebs zu gewährleisten oder sogar zunehmend zu verbessern, sodass auch ein möglicher Produktausschuss minimiert werden kann.

Beispielhaft jedoch nicht erfindungsgemäß wird die Verwendung einer oder mehrerer Verstelleinrichtungen zum Verstellen zumindest einer Fördereinrichtung gezeigt, mit der Objekte entlang einer sich in Förderrichtung erstreckenden, ein- oder mehrspurigen Förderstrecke gefördert und insbesondere an eine zumindest teilweise der Förderstrecke nachgelagerte Verpackungsmaschine übergeben werden, quer zur Förderrichtung, wobei die Verstelleinrichtung eine sich in Querrichtung erstreckende Führung und zumindest ein der Fördereinrichtung zugeordnetes, mittels einer Steuereinrichtung entlang der Führung in Querrichtung gesteuert bewegbares Element umfasst, das mit der Fördereinrichtung gekoppelt ist, und wobei durch Bewegen des Elements entlang der Führung die Querposition des zu übergebenden Objekts verändert wird.

Gemäß einem Ausführungsbeispiel wird die Fördereinrichtung zum Korrigieren der Querposition der zu übergebenden Objekte innerhalb der Spur, oder bei einer mehrspurigen Förderstrecke zum Verteilen der zu übergebenden Objekte von der jeweiligen Spur auf eine der anderen Spuren, oder zum Überführen in eine Parkposition zur Veränderung der Anzahl der Spuren verstellt.

Es kann vorgesehen sein, dass die Verstelleinrichtung einen Linearmotor umfasst, dessen Stator die Führung bildet, und wobei das bewegbare Element als Läufer des Linearmotors ausgebildet ist, oder dass die Verstelleinrichtung einen Spindeltrieb umfasst, dessen Gewindespindel die Führung bildet, und wobei das bewegbare Element als Spindelmutter des Spindeltriebs ausgebildet ist. Davon abweichende Ausgestaltungen der Verstelleinrichtung sind ebenfalls möglich, d.h. die Verstelleinrichtung bzw. deren Antrieb ist nicht auf den Einsatz eines Linearmotors oder eines Spindeltriebs beschränkt.

Die Erfindung wird im Folgenden beispielhaft unter Bezugnahme auf die Zeichnungen beschrieben. Es zeigen:
- Fig. 1: schematisch eine erfindungsgemäße Vorrichtung zum Handhaben von Objekten entlang einer Arbeitsstrecke,
- Fig. 2: schematisch eine Draufsicht auf mit bewegbaren Elementen einer Verstelleinrichtung gekoppelte Fördereinrichtungen einer erfindungsgemäßen Vorrichtung,
- Fig. 3: schematisch eine perspektivische Ansicht einer mit einem bewegbaren Element einer Verstelleinrichtung gekoppelten Fördereinrichtung einer erfindungsgemäßen Vorrichtung,
- Fig. 4a bis 4f: jeweils schematisch mögliche Anwendungen von Verstelleinrichtungen zur erfindungsgemäßen Querverstellung von Fördereinrichtungen,
- Fig. 5: eine perspektivische Unteransicht von mit jeweiligen Endabschnitten von Fördereinrichtungen gekoppelten Servomotoren zum individuellen Verstellen der Fördereinrichtungen,
- Fig. 6: eine perspektivische Ansicht eines der Servomotoren und
- Fig. 7a bis 7d: jeweilige perspektivische Draufsichten auf die mit Servomotoren gekoppelten Endabschnitte bei verschiedenen Einstellungen deren Querpositionen.

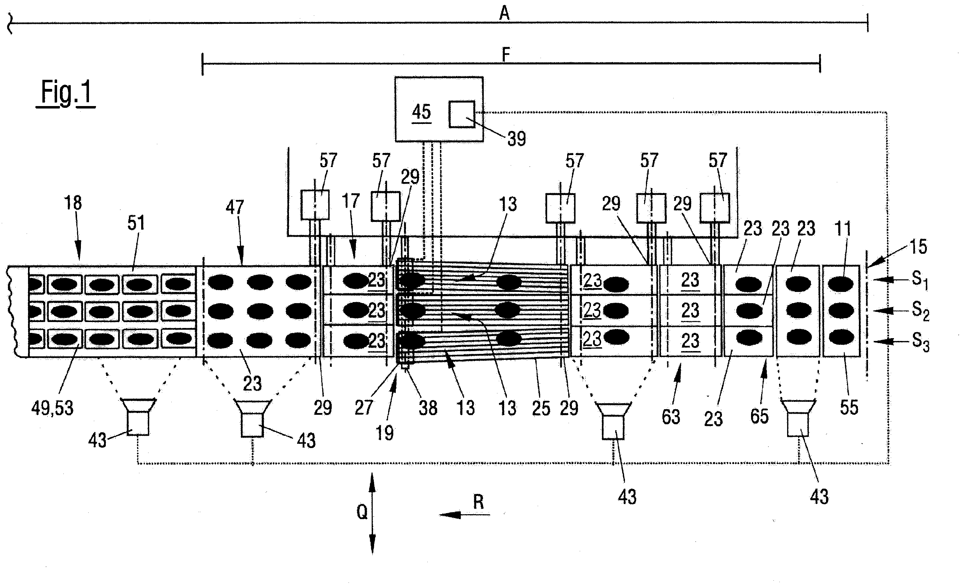

Fig. 1 zeigt eine Vorrichtung zum Handhaben von Objekten 11 entlang einer Arbeitsstrecke A, die hier einen einer Förderstrecke F vorgeschalteten Hochgeschwindigkeitsslicer 15, die Förderstrecke F und eine der Förderstrecke F zumindest teilweise nachgelagerte Verpackungsmaschine 18 umfasst, wobei in Fig. 1 lediglich der sich unmittelbar an die Förderstrecke F anschließende Teil der Verpackungsmaschine 18 gezeigt ist.

Nicht gezeigte Lebensmittelproduktriegel werden vom Hochgeschwindigkeitsslicer 15 in Scheiben geschnitten und bilden Portionen 11 auf einem Portionierband 55, das typischerweise als dem Hochgeschwindigkeitsslicer 15 und somit nicht der Förderstrecke F zugehörig angesehen wird. Im gezeigten Beispiel wird die Vorrichtung dreispurig betrieben und die Lebensmittelproduktriegel werden dem Hochgeschwindigkeitsslicer 15 in drei Spuren zugeführt und von diesem aufgeschnitten, sodass sich Portionen 11 in den Spuren S₁, S₂ und S₃ auf dem Portionierband 55 bilden. Dieser dreispurige Betrieb dient lediglich einer beispielhaften Illustration und ist keineswegs einschränkend hinsichtlich der erfindungsgemäßen Vorrichtung. Vielmehr kann grundsätzlich eine beliebige Anzahl von Spuren S realisiert werden, wobei insbesondere vier bis acht Spuren einen gängigen Anwendungsbereich von Hochgeschwindigkeitsslicern 15 darstellen.

Vom Portionierband 55 werden die fertiggestellten Portionen 11 an ein Endlosförderband 23 übergeben, welches hier die erste von der Förderstrecke F umfasste Einheit darstellt, entlang der die Portionen 11 in Förderrichtung R gefördert werden. Die Portionen 11 können auf diesem Endlosförderband 23 beispielsweise gewogen werden und von dort auf eine Wippe 65 gelangen, die für jede der Spuren S₁ bis S₃ als kippbares Endlosförderband 23 ausgebildet ist, sodass fehlerhafte Portionen 11 ausgesondert werden können.

In der Folge werden die Lebensmittelportionen 11 durch einen Puffer 63 geführt, auf dem im in Fig. 1 gezeigten Betriebszustand gerade keine Portionen 11 vorhanden sind. Der Puffer 63 dient insbesondere dazu, Lücken im Portionsstrom, die beispielsweise während eines Wechsels eines bereits aufgeschnitten Produktriegels in einer Spur entstehen, auszugleichen. Die dem Puffer 63 zugehörigen Endlosförderbänder 23, die jeweils einer Spur S₁ bis S₃ zugeordnet sind, werden über einen Antriebsmotor 57 angetrieben, der die eingangsseitigen Umlenkungen 29 der Endlosförderbänder 23 antreibt. Die Portionen 11 werden so auf weitere spurindividuelle Endlosförderbänder 23 gefördert und gelangen von dort, wiederum über einen an einer eingangsseitigen Umlenkung 29 angreifenden Antriebsmotor 57, in einen Bereich, in dem für jede Spur eine in erfindungsgemäßer Weise verstellbare Fördereinrichtung 13 bereitgestellt ist.

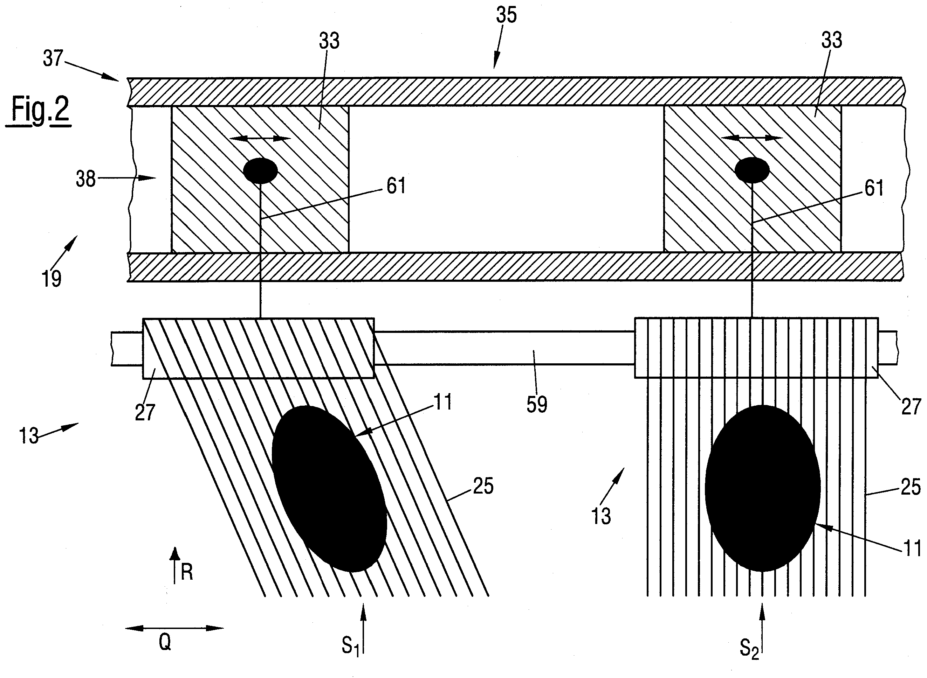

Diese Fördereinrichtungen 13 sind jeweils einer der Spuren S₁ bis S₃ zugeordnet und umfassen sowohl eine eingangsseitige Umlenkung 29 als auch eine ausgangsseitige Umlenkung 27. Die Portionen 11 werden in der Fördereinrichtung 13 in jeder Spur S über mehrere Endlosförderriemen 25 gefördert, die gemeinsam ein spurindividuelles Endlosfördermittel bereitstellen. Die ausgangsseitigen Umlenkungen 27 der jeweiligen Endlosfördermittel sind dabei mit nicht gezeigten, bewegbaren Elementen 33 (vgl. Fig. 2, 3, 4 bis 7d) einer Verstelleinrichtung 19 gekoppelt, durch die das ausgangsseitige Ende der Fördereinrichtung 13 in Querrichtung Q verstellt werden kann.

Durch eine derartige Querverstellung der ausgangsseitigen Umlenkungen 27 der Fördereinrichtungen 13 können innerhalb einer jeweiligen Fördereinrichtung 13 nicht mit einer vorgegebenen Querlage in ihrer Spur S laufende Portionen 11 dennoch in korrekt in Querrichtung Q ausgerichteter Weise an eine nachgeschaltete Funktionseinheit 17, die hier von weiteren Endlosförderbändern 23 gebildet wird, übergeben werden. Wie in Fig. 1 dargestellt, können die vorstehend erwähnten, mit den ausgangsseitigen Umlenkungen 27 der Fördereinrichtungen 13 gekoppelten bewegbaren Elemente 33 (vgl. Fig. 2, 3, 4 bis 7d) unabhängig voneinander in Querrichtung Q bewegt werden, sodass in jeder Spur S eine individuelle, von den jeweils anderen Spuren unabhängige Querverstellung erzeugt werden und so die Querposition der Portionen 11 spurindividuell korrigiert werden kann.

Von den den erfindungsgemäß verstellbaren Fördereinrichtungen 13 nachgeschalteten Endlosförderbändern 23 gelangen die Portionen 11, wiederum durch ein Antreiben der Förderbänder 23 mittels eines an der eingangsseitigen Umlenkung 29 angreifenden Antriebs 57, auf einen ein Endlosförderband 23 umfassenden Einleger 47. Die Förderbewegung des Einlegers 47 über seinen Antrieb 57 ist dabei derart mit dem typischerweise intermittierenden, getakteten Vorschub der der Förderstrecke F zumindest teilweise nachgelagerten Verpackungsmaschine 18 synchronisiert, dass die Portionen 11 passgenau vom Einleger 47 in dafür vorgesehene Vertiefungen 53 der von der Verpackungsmaschine 18 entsprechend taktweise vorgezogenen Materialbahn 51 eingelegt werden.

Im gezeigten Ausführungsbeispiel wird die Materialbahn 51 von der Verpackungsmaschine 18 unterhalb der Förderstrecke F transportiert, was durch die in den Vertiefungen 53 überproportional klein dargestellten Portionen 11 illustriert ist.

Entlang der Arbeitsstrecke A sind mehrere Sensoren 43 angeordnet, die hier als Bildaufnahmeeinrichtungen 43 z.B. in Form von Kameras ausgebildet sind. Mittels dieser Bildaufnahmeeinrichtungen 43 kann die Lage der Objekte 11 an verschiedenen Orten der Arbeitsstrecke A erfasst und an eine Kontrolleinrichtung 39, als deren Bestandteil die Kameras 43 verstanden werden können, übermittelt werden. Somit kann beispielsweise die Lage der Objekte 11 innerhalb der Vertiefungen 53 in der Materialbahn 51 der Verpackungsmaschine 18, die Lage der Objekte 11 auf dem Einleger 47, die Lage der Objekte 11 auf den dem Puffer 63 nachgeschalteten Förderbändern 23 oder die Lage der Objekte 11 nach der Übergabe vom Portionierband 55 an die erste Einheit der Förderstrecke F überprüft werden.

Die Kontrolleinrichtung 39 dient dazu, die von den Bildaufnahmeeinrichtungen 43 übermittelten Informationen auszuwerten und an eine Steuereinrichtung 45 zu übergeben, die dazu ausgebildet ist, die bewegbaren Elemente 33 (vgl. Fig. 2, 3, 4 bis 7d) der Verstelleinrichtung 19 spurindividuell anzusteuern, um eine Korrektur der Querposition der Objekte 11 in ihrer jeweiligen Spur S₁ bis S₃ vorzunehmen. Dabei kann die Kontrolleinrichtung 39, abgesehen von den Kameras 43, ein Bestandteil der Steuereinrichtung 45 und somit lediglich als geeignete Software zur Verarbeitung der Informationen der Bildaufnahmeeinrichtungen 43 realisiert sein. Es kann jedoch auch vorgesehen sein, die Kontrolleinrichtung 39 als gesondertes Bauteil zu integrieren. Bei der Steuereinrichtung 45 handelt es sich bevorzugt um die zentrale Steuerung der Gesamtanlage aus Slicer 15, Förderstrecke F und Verpackungsmaschine 18.

Im Ausführungsbeispiel der Fig. 1 wird die Lage der Objekte 11 an zwei der Fördereinrichtung 13 vorgelagerten Orten und zwei der Fördereinrichtung 13 nachgelagerten Orten in Bezug auf die Förderrichtung R erfasst. Es ist daher möglich, mehrere Quellen, die zu einem ungenauen Positionieren der Portionen 11 auf der zugehörigen Spur S führen können, wie zum Beispiel ein unpräzises Fallen der Scheiben auf die jeweilige Spur S nach dem Abschneiden, Verzerrungen der Formate im Puffer 63 oder eine ungenaue Übergabe der Objekte 11 auf den Einleger 47 oder an die vorgesehenen Vertiefungen 53 in der Materialbahn 51, zu überprüfen. Indem auch Informationen über die Lage der Objekte 11 an der Fördereinrichtung 13 nachgeschalteten Orten an die Kontrolleinrichtung 39 übermittelt werden, kann somit der Effekt der vorgenommenen Querverstellung und die von der Steuereinrichtung 45 vorgenommene Korrektur überprüft werden. Dies ermöglicht es, die Präzision der Korrektur im laufenden Prozess zu optimieren, beispielsweise, indem die Kontrolleinrichtung 39 oder die Steuereinrichtung 45 einen selbstlernenden Algorithmus umfassen, mittels dessen folgende Korrekturen an die Ergebnisse vorhergehender Korrekturen angepasst werden können.

Insbesondere kann mittels des erfindungsgemäßen Konzeptes ein entsprechender Regelkreis realisiert werden, bei dem die Querposition von Portionen 11 innerhalb einer jeweiligen Spur S in Abhängigkeit von Abweichungen der Ist-Querposition, die stromaufwärts und/oder stromabwärts der jeweiligen Fördereinrichtung 14 ermittelt wird, von einer Soll-Querposition mittels der Verstelleinrichtung 19 innerhalb der jeweiligen Spur verändert wird.

Ebenfalls kann vorgesehen sein, mehrere jeweils in erfindungsgemäßer Weise in Querrichtung Q verstellbare Fördereinrichtungen 13 entlang der Förderstrecke F zu positionieren und somit erkannte Abweichungen der Lage der Portionen 11 an verschiedenen Orten direkt zu korrigieren. Vorteilhaft ist es ferner, wenn die Fördereinrichtungen 13 über separate eingangsseitige Umlenkungen 29 für jede Spur verfügen, die auf einer gemeinsamen Welle gelagert sein können, jedoch mittels des Antriebs 57 spurindividuell angetrieben werden, sodass auch eine Längsverstellung der Portionen 11 bzw. eine Korrektur entlang der Förderrichtung R an den Fördereinrichtungen 13 spurindividuell vorgenommen werden kann.

Durch die Bildaufnahmeeinrichtung 43 können weiterhin nicht nur Informationen über die Lage der Portionen 11 gewonnen werden, sondern es können auch weitere Daten, beispielsweise hinsichtlich des Gewichts der Portionen 11 oder ihrer Qualität, erfasst und von der Kontrolleinrichtung 39 oder der Steuereinrichtung 45 verarbeitet werden.

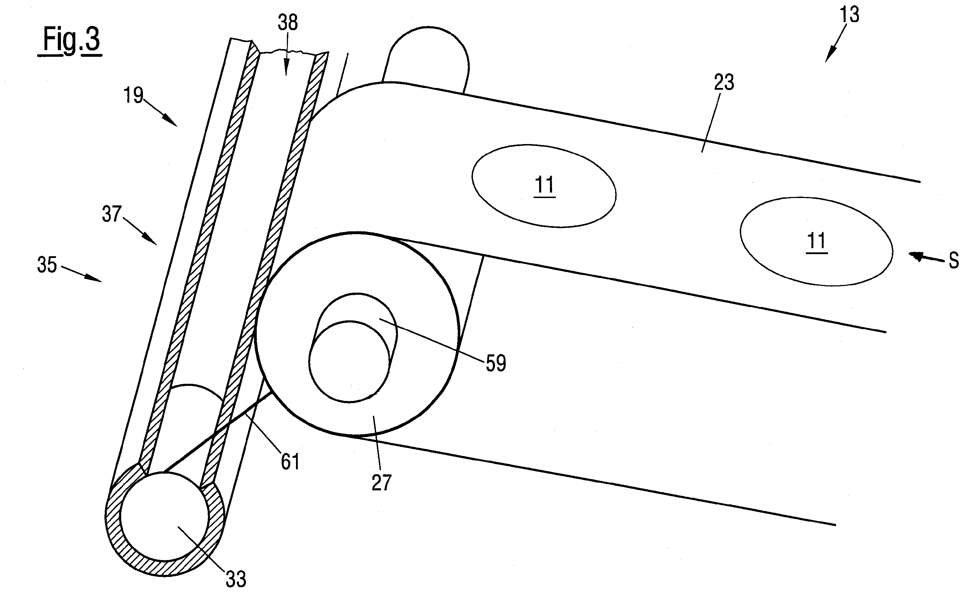

Die Fig. 2 und 3 zeigen jeweils eine Ansicht auf einen Bereich von mit einer Verstelleinrichtung 19 gekoppelten, ausgangsseitigen Umlenkungen 27 von in erfindungsgemäßer Weise verstellbaren Fördereinrichtungen 13. Gemäß Fig. 2 werden Objekte 11 in zwei Spuren S₁ und S₂ jeweils durch eine ihrer Spur S₁ oder S₂ zugeordnete Fördereinrichtung 13 in Förderrichtung R transportiert. Die ausgangsseitigen Umlenkungen 27 der Fördereinrichtungen 13 sind auf einer gemeinsamen Lagerung 59 angeordnet und die Fördereinrichtungen 13 umfassen jeweils ein Endlosfördermittel, welches hier von mehreren schmalen, in Querrichtung mit Abstand voneinander angeordneten Endlosförderriemen 25 gebildet ist.

Die ausgangsseitigen Umlenkrollen 27 der Fördereinrichtungen 13 sind mit je einem der verschiebbaren Elemente 33 der Verstelleinrichtung 19, die hier als Läufer 33 eines Linearmotors 35 ausgebildet sind, über eine hier rein schematisch dargestellte Kopplung 61 verbunden. Die Läufer 33 sind von einem Stator 37 umgeben, der die notwendigen Wicklungen zur Erzeugung wechselnder Magnetfelder zum Antreiben und Positionieren der Läufer 33 in Querrichtung Q enthält und eine Führung 38 für die Läufer 33 bereitstellt. Alternativ kann umgekehrt der Stator 37 von einem oder mehreren Permanentmagneten gebildet sein, während die Mittel zur Erzeugung der wechselnden Magnetfelder in den Läufern 33 enthalten sind.

Die Läufer 33 weisen folglich einen gemeinsamen Stator 37 auf und können unabhängig voneinander relativ zum Stator 37 bewegt werden. Derartige Linearmotoren mit unabhängig voneinander bewegbaren Läufern sind dem Fachmann grundsätzlich bekannt und am Markt verfügbar, so dass hier Aufbau und Funktionsweise derartiger Linearmotoren nicht näher erläutert zu werden brauchen. Die Verwendung derartiger Linearmotoren für die hierin offenbarten Vorrichtungen und Anwendungen stellen dagegen einen Aspekt der Erfindung dar.

Indem die ausgangsseitigen Umlenkrollen 27 der Fördereinrichtungen 13 über jeweilige Kopplungen 61 mit den Läufern 33 verbunden sind, können die Fördereinrichtungen 13 individuell verstellt werden und die Lage der Objekte 11 in der zugehörigen Spur S kann verändert werden. Wie in Fig. 2 gezeigt, ist die Spur S₁ in Querrichtung Q in Bezug auf die Förderrichtung R so verstellt, dass die Förderrichtung in dieser Spur S₁ schräg zur Förderrichtung R verläuft, während in der Spur S₂ keine Auslenkung bezogen auf die Förderrichtung R erfolgt ist und so die Objekte 11 weiter ausschließlich parallel zur Förderrichtung R gefördert werden.

Fig. 3 zeigt eine Verstelleinrichtung 19, die einen Linearmotor 35 umfasst, dessen Stator 37 eine rohrförmige Führung 38 für einen Läufer 33 bereitstellt, der über eine Kopplung 61 mit der ausgangsseitigen Umlenkung 27 eines Endlosförderbands 23 einer Fördereinrichtung 13 gekoppelt ist.

Die Kopplung 61 zwischen dem Läufer 33 und der ausgangsseitigen Umlenkung 27 kann dabei in jeder beliebigen, an die jeweilige Anwendung angepassten Weise erfolgen, sodass diese hier wiederum rein schematisch dargestellt ist. Durch die im Stator 37 erzeugten, wechselnden Magnetfelder kann der Läufer 33 präzise mittels der Führung 38 entlang des Stators 37 geführt und positioniert werden, um eine gewünschte Korrektur der Querposition der in der betreffenden Spur S mittels der Fördereinrichtung 13 transportierten Objekte 11 vorzunehmen.

Während Fig. 2 zwei Fördereinrichtungen 13, die jeweils einer Spur S₁ oder S₂ zugeordnet und mit je einem Läufer 33 gekoppelt sind, und Fig. 3 lediglich schematisch eine mit einem Läufer 33 gekoppelte Fördereinrichtung 13 zeigt, können grundsätzlich jeweils beliebig viele nebeneinander angeordnete Fördereinrichtungen 13 realisiert und jeweils mit einem Läufer 33, der entlang des Stators 37 geführt ist, gekoppelt sein. Ferner können auch mehrere Spuren S einer gemeinsamen Fördereinrichtung 13 zugeordnet sein.

In manchen Anwendungsfällen kann es vorteilhaft sein, für jede Fördereinrichtung 13 eine gesonderte Verstelleinrichtung 19 und somit insgesamt mehrere Linearmotoren 35 mit parallel zueinander versetzt verlaufenden Statoren 37 vorzusehen, die jeweils eine in Querrichtung Q verlaufende Führung 38 für den betreffenden Läufer 33 bereitstellen.

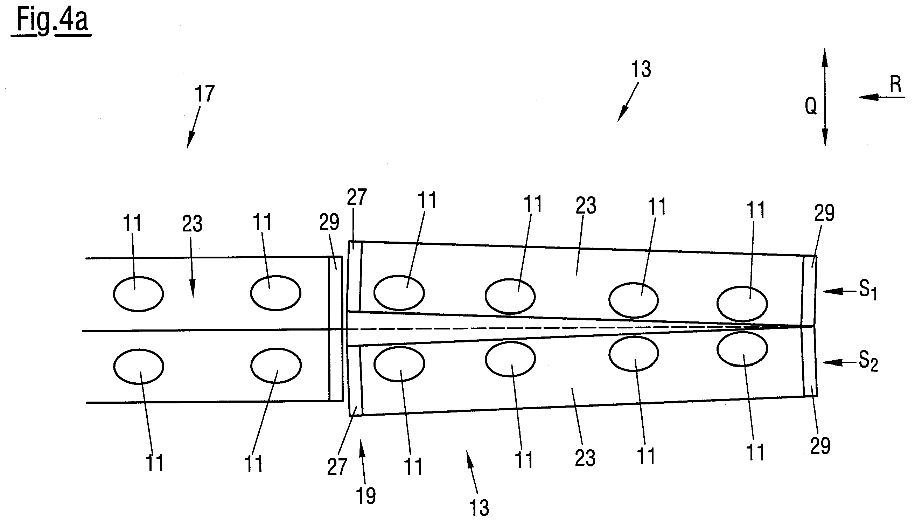

Die Fig. 4a bis 4f zeigen jeweils mögliche Anwendungsbeispiele der beschriebenen, mit einer Verstelleinrichtung 19 gekoppelten Fördereinrichtungen 13, wobei sich diese auch auf nachstehend beschriebene Ausführungsformen mit Servomotoren zum Verstellen der Fördereinrichtungen 13 beziehen.

Es werden jeweils Objekte 11 entlang einer Förderrichtung R mittels Fördereinrichtungen 13 transportiert und von diesen an eine nachgeschaltete Funktionseinheit 17, die in den gezeigten Beispielen jeweils ein Endlosförderband 23 umfasst, übergeben. Die Fördereinrichtungen 13 verfügen dabei jeweils über eine eingangsseitige Umlenkung 29 und eine ausgangsseitige Umlenkung 27, wobei die Objekte 11 am Bandübergang, der von der ausgangsseitigen Umlenkung 27 einer Fördereinrichtung 13 und der eingangsseitigen Umlenkung 29 der nachgeschalteten Funktionseinheit 17 gebildet wird, von der Fördereinrichtung 13 an die nachgeschaltete Funktionseinheit 17 übergeben werden.

Fig. 4a zeigt eine erfindungsgemäße Ausführungsform, bei der die Objekte 11 in Förderrichtung R in zwei Spuren S₁ und S₂ durch jeweils den Spuren zugeordnete Fördereinrichtungen 13 transportiert werden. Die Fördereinrichtungen 13 sind dabei jeweils mit nicht gezeigten verstellbaren Elementen 33 einer Verstelleinrichtung 19 gekoppelt, sodass die Fördereinrichtungen 13 individuell in Querrichtung Q verschoben werden können. Die beiden Fördereinrichtungen 13 werden im gezeigten Beispiel so gegenüber ihrer durch die gestrichelte Linie angedeuteten, geradlinigen Ausrichtung in Querrichtung Q verstellt, dass die hier in fehlerhafter Weise jeweils innen auf den Endlosförderbändern 23 der Fördereinrichtungen 13 liegenden Objekte 11 zentriert an die nachgeschaltete Funktionseinheit 17 übergeben werden. Die Fehlstellungen der Objekte innerhalb der Fördereinrichtungen 13 können somit korrigiert werden.

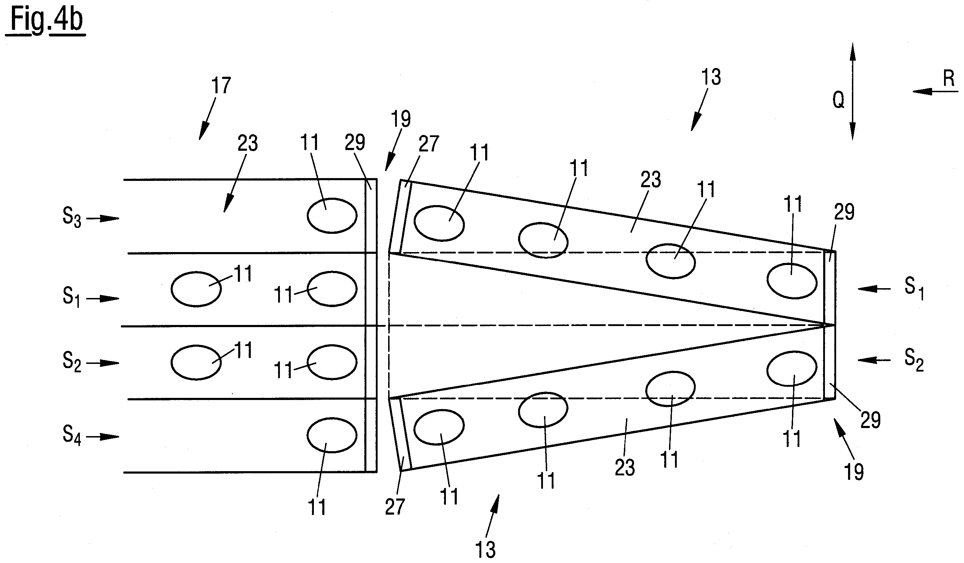

Fig. 4b zeigt ein weiteres Ausführungsbeispiel, in der zwei Fördereinrichtungen 13 derart in Querrichtung Q verstellt werden, dass die Spuranzahl von zwei Spuren S₁ und S₂ im Bereich der Fördereinrichtungen 13 auf vier Spuren S₁ bis S₄ an der nachgeschalteten Funktionseinheit 17 erhöht werden kann. Dabei wurden in einem vorhergehenden Schritt die Objekte 11 innerhalb ihrer Spuren S₁ und S₂ entlang der gestrichelten Linien an die nachgeschaltete Funktionseinheit 17 übergeben, während die Fördereinrichtungen 13 daraufhin mittels der Verstelleinrichtung 19 in Querrichtung Q verstellt wurden, sodass die nachfolgenden Objekte 11 von ihren Spuren S₁ und S₂ innerhalb der Fördereinrichtung 13 an die Spuren S₃ und S₄ der nachgeschalteten Funktionseinheit 17 übergeben werden.

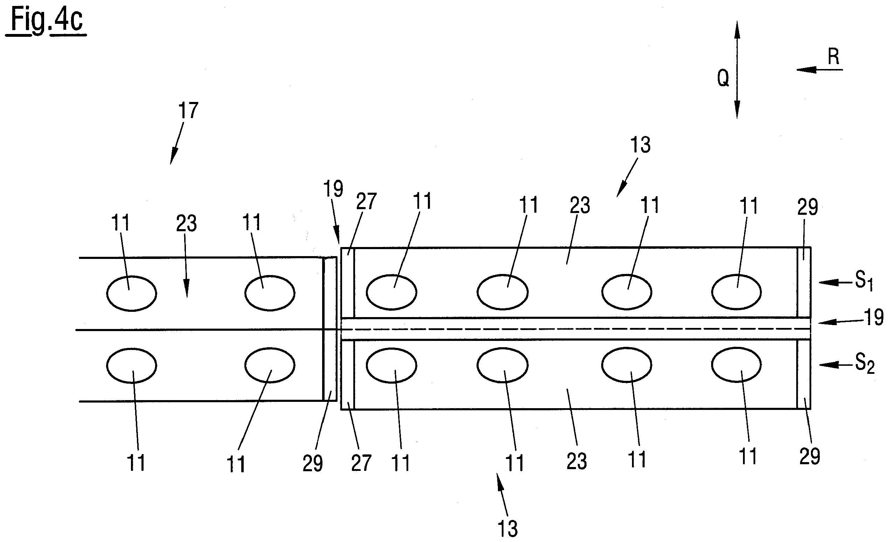

Im in Fig. 4c gezeigten Ausführungsbeispiel werden zwei Fördereinrichtungen 13 durch Verstelleinrichtungen 19 derart in Querrichtung Q zur Förderrichtung R verstellt, dass die innerhalb der Fördereinrichtungen 13 nicht zentral in ihrer jeweiligen Spur S₁ und S₂ transportierten Objekte 11 zentriert innerhalb ihrer Spur an die nachgeschaltete Funktionseinheit 17 übergeben werden können. Die Fördereinrichtungen 13 sind hier jeweils sowohl an ihren ausgangsseitigen Umlenkungen 27 als auch an ihren eingangsseitigen Umlenkungen 29 mit bewegbaren Elementen 33 der Verstelleinrichtung 19 gekoppelt, sodass die Fördereinrichtungen 13 jeweils als Ganzes verschoben werden können. Dabei ist es erfindungsgemäß nicht unbedingt erforderlich, dass die Querverstellung, wie in Fig. 4c gezeigt, am eingangsseitigen Ende und am ausgangsseitigen Ende jeweils gleich weit erfolgt, sondern es können auch jeweils unterschiedlich weite Querverstellungen vorgenommen werden.

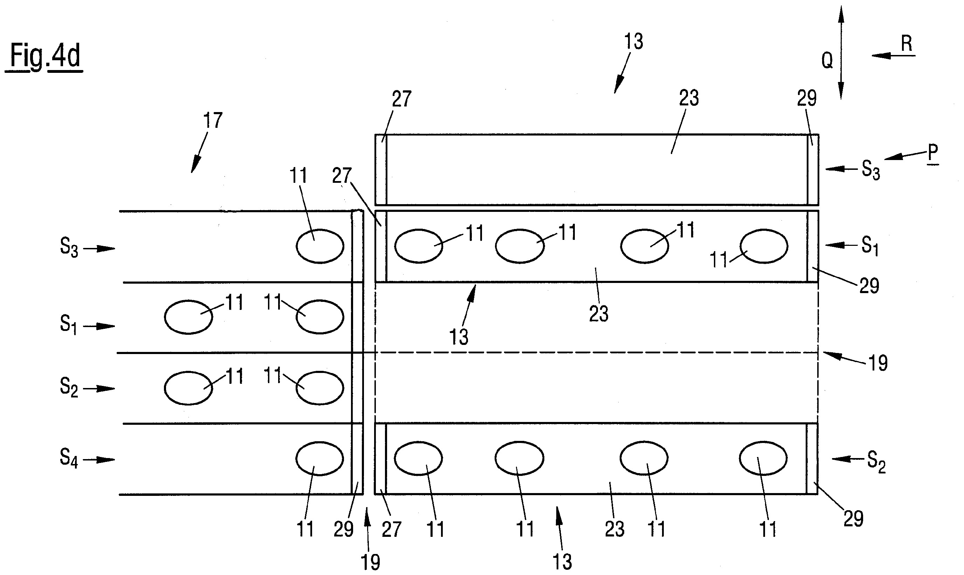

Fig. 4d zeigt wiederum zwei jeweils als Ganzes querverstellbare Fördereinrichtungen 13, die hier dazu benutzt werden, die Spuranzahl von zwei Spuren S₁ und S₂ innerhalb der Fördereinrichtungen 13 auf vier Spuren S₁ bis S₄ innerhalb der nachgeschalteten Funktionseinheit 17 zu erhöhen. Wie auch in Fig. 4b gezeigt, wurden dabei in einem vorgeschalteten Schritt die Objekte 11 zunächst innerhalb ihrer Spuren S₁ und S₂ an die nachgeschaltete Funktionseinheit 17 übergeben, während die Objekte nun nach der Verstellung der Fördereinrichtungen 13 in Querrichtung Q von ihren Spuren S₁ und S₂ an die Spuren S₃ und S₄ der nachgeschalteten Funktionseinheit 17 übergeben werden. Eine weitere Fördereinrichtung 13, an die von einer nicht gezeigten, vorgeschalteten Funktionseinheit in der dargestellten Betriebssituation keine Objekte 11 übergeben werden, ist in eine seitlich äußere Parkposition P verfahren, um maximale Querverschiebungen der anderen, von der erwähnten vorgeschalteten Funktionseinheit nicht bedienten Fördereinrichtungen 13 zu ermöglichen.

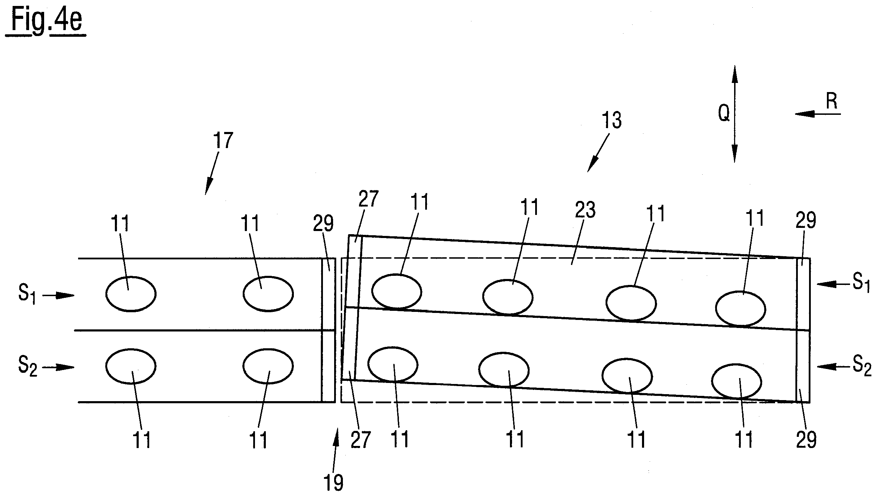

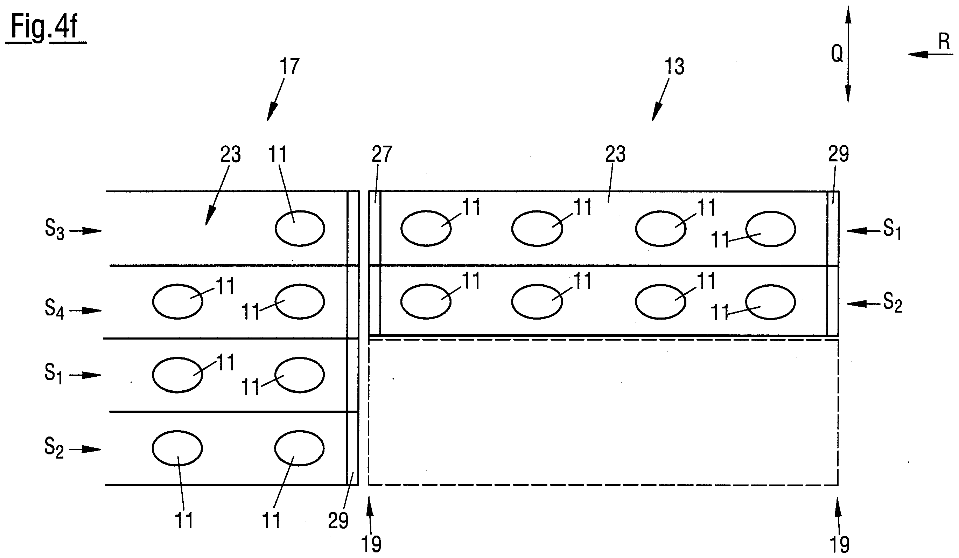

Die Fig. 4e und 4f zeigen jeweils eine Fördereinrichtung 13, auf der Objekte 11 mehrspurig geführt werden. Gemäß Fig. 4e ist die Fördereinrichtung 13 an ihrer ausgangsseitigen Umlenkung 27 mit einer Verstelleinrichtung 19 gekoppelt, sodass das ausgangsseitige Ende der Fördereinrichtung 13 in Querrichtung Q verstellt werden kann und innerhalb der Fördereinrichtung 13 nicht zentral in ihrer jeweiligen Spur S₁ oder S₂ transportierte Objekte 11 zentriert an die nachgeschaltete Funktionseinheit 17 innerhalb der jeweiligen Spur übergeben werden können.

In Fig. 4f wird die Fördereinrichtung 13 derart betrieben, dass die Anzahl an Spuren S von der Fördereinrichtung 13 zur nachgeschalteten Funktionseinheit 17 von zwei Spuren S₁ und S₂ auf vier Spuren S₁ bis S₄ erhöht wird. Wiederum wurden die Objekte 11 in einem vorgeschalteten Schritt zunächst entlang ihrer Spuren S₁ und S₂ an die nachgeschaltete Funktionseinheit 17 übergeben, woraufhin die Fördereinrichtung 13 durch eine Verstelleinrichtung 19, die sowohl mit der ausgangsseitigen Umlenkung 27 der Fördereinrichtung 13 als auch der eingangsseitigen Umlenkung 29 der Fördereinrichtung 13 gekoppelt ist, als Ganzes verstellt, sodass im gezeigten Schritt die Objekte 11 von ihren Spuren S₁ und S₂ innerhalb der Fördereinrichtung 13 auf die Spuren S₃ und S₄ der nachgeschalteten Funktionseinheit 17 gefördert werden.

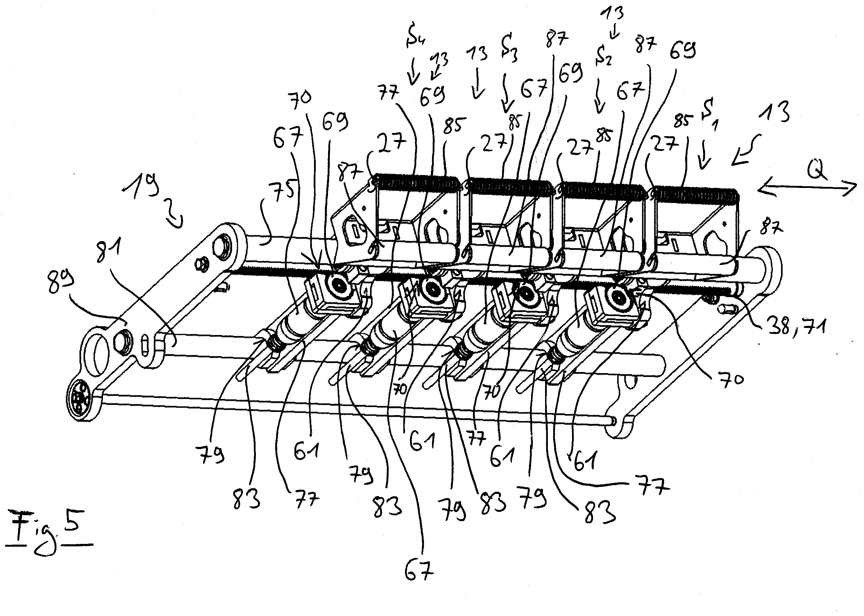

Fig. 5 zeigt eine Unteransicht auf vier ausgangsseitige Umlenkungen 27 jeweiliger Fördereinrichtungen 13, die mittels einer Verstelleinrichtung 19 individuell in Querrichtung Q verstellbar sind. Die ausgangsseitigen Umlenkungen 27 sind dabei jeweiligen Spuren S₁ bis S₄ zugeordnet, so dass nicht gezeigte Objekte 11, beispielsweise mittels eines Hochgeschwindigkeitsslicers von Lebensmittelprodukten abgetrennte Scheiben oder Portionen, in vier Spuren S₁ bis S₄ an eine nachgeschaltete Funktionseinheit 17 übergeben werden können (vgl. auch Fig. 1). Die Umlenkungen 27 weisen dabei jeweils eine obere Rolle 85 und eine untere Rolle 87 auf, über welche Endlosfördermittel, beispielsweise ein relativ breiteres Endlosförderband 23 oder mehrere relativ schmalere Endlosförderriemen 25, geführt werden können. Solche Endlosfördermittel können an eingangsseitigen Umlenkungen 29 mittels jeweiliger Antriebsmotoren 57 angetrieben werden, um die Fördereinrichtungen 13 auch in Förderrichtung R individuell betreiben zu können (vgl. Fig. 1).

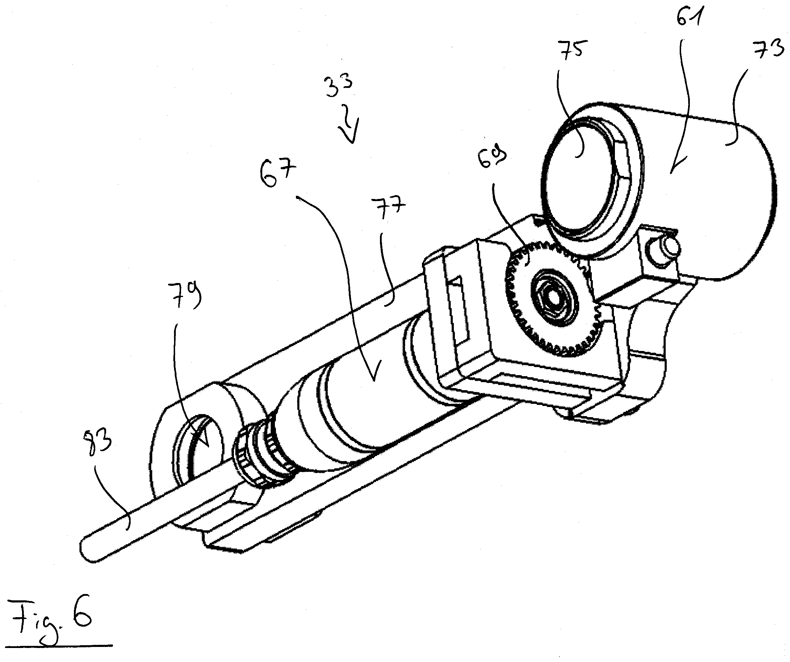

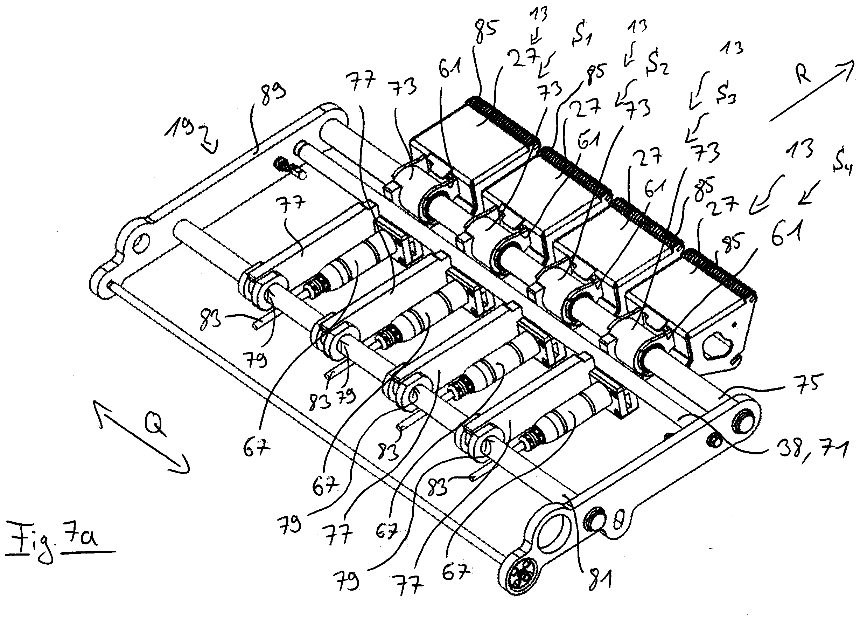

Um die ausgangsseitigen Umlenkungen 27 und damit die Fördereinrichtungen 13 in Querrichtung Q in jeder der Spuren S₁ bis S₄ individuell verstellen und beispielsweise Korrekturen der Querposition von geförderten Objekten 11 vornehmen zu können, sind die Umlenkungen 27 über Kopplungen 61 mit einem jeweiligen Servomotor 67 verbunden (vgl. auch Fig. 6 und Fig. 7a bis 7d). Jeder der Servomotoren 67 weist an einem hinteren Ende ein Kabel 83 auf, so dass die Servomotoren 67 über eine Steuereinrichtung 45 individuell ansteuerbar sind, um etwaige Querverstellungen der zugeordneten Fördereinrichtung 13 unabhängig von den anderen Fördereinrichtungen 13 vornehmen zu können.

Die Servomotoren 67 treiben ein jeweiliges Zahnrad 69 an, welches in einer Führung 38 umläuft, die als Zahnstange 71 ausgebildet ist und als Führungseinrichtung 71 wirkt (vgl. Fig. 5 und 6). Die Zahnräder 69 und die Zahnstange 71 bilden damit ein durch die jeweiligen Servomotoren 67 beaufschlagbares Zahnstangengetriebe 70, welches zwischen die Servomotoren 67 und die Fördereinrichtungen 13 geschaltet ist. Durch dieses Zahnstangengetriebe 70 kann aus einer Rotationsbewegung der Zahnräder 69, deren Zähne mit einer Verzahnung der Zahnstange 71 kämmen, eine translatorische Komponente gewonnen und eine translatorische Bewegung der mit den Zahnrädern 69 verbundenen und die Zahnräder 69 antreibenden Servomotoren 67 erreicht werden. Entsprechend können auch die Querpositionen der mit den Servomotoren 67 über die Kopplungen 61 verbundenen Fördereinrichtungen 13 bzw. deren Umlenkungen 27 durch Antreiben der Zahnräder 69 mittels der jeweiligen Servomotoren 67 individuell korrigiert werden. Insofern bilden die Servomotoren 67 bewegbare Elemente 33 der Verstelleinrichtung 19, welche mit den Fördereinrichtungen 13 gekoppelt sind.

Um eine Bewegung der Servomotoren 67 in Querrichtung zuverlässig und präzise auf die jeweilige Fördereinrichtung 13 zu übertragen, sind die Servomotoren 67 mit einem jeweiligen schienenartigen Übertragungselement 77 verbunden, welches sich in Förderrichtung R erstreckt und einen Teil der Kopplung 61 bildet (vgl. auch Fig. 6). Die Übertragungselemente 77 weisen an einem hinteren Ende eine Halterungsausnehmung 79 auf, durch welche eine hintere Führungsstange 81 geführt ist, um die Übertragungselemente 77 und dadurch die zugeordneten Servomotoren 67 an diesem hinteren Ende in einem Gestell 89 zu halten. Ferner sind die Übertragungselemente 77 vorderseitig mit einer Halterungsrolle 73 verbunden, durch welche eine vordere Führungsstange 75 des Gestells 89 geführt ist. Durch diese beidseitige Lagerung der Übertragungselemente 77 und damit der Servomotoren 67 können translatorischen Bewegungen der Servomotoren 67 präzise auf die Übertragungselemente 77 und damit die Kopplungen 61 übertragen werden, so dass ein Verstellen der Fördereinrichtungen 13 erreicht werden kann, ohne dass die Servomotoren 67 bzw. die Kopplungen 61 beispielsweise verkanten können. Insofern bildet der Servomotor 67 hierbei ein bewegbares Element 33 der Verstelleinrichtung 19, mittels dessen die zugeordnete Fördereinrichtung 13 verstellt werden kann.

Durch die Möglichkeit, mittels der Servomotoren 67 Drehstellungen des jeweiligen zugeordneten Zahnrads 69 äußerst präzise und schnell einstellen zu können, können selbst geringfügige Korrekturen der Querpositionen der Fördereinrichtungen 13 exakt und beispielsweise zwischen zwei Takten einer nachgeschalteten Verpackungsmaschine 18 vorgenommen werden.

Die Fig. 7a bis 7d veranschaulichen nochmals verschiedene Möglichkeiten zum Verstellen bzw. Anordnen der ausgangsseitigen Umlenkungen 27 der Fördereinrichtungen 13 mittels einer Verstelleinrichtung 19 mit individuell antreibbaren Servomotoren 67. Neben einer Korrektur einer Querposition von mittels der Fördereinrichtung 13 bewegten Objekten 11 während des Betriebs ermöglicht es eine solche Verstelleinrichtung 19 auch, die Fördereinrichtungen 13 flexibel an bestimmte Betriebssituationen angepasst auszurichten (vgl. auch Fig. 4a bis 4f).

Wie Fig. 7a zeigt, können die ausgangsseitigen Umlenkungen 27 mittels der Servomotoren 67 beispielsweise mittig bezüglich der Querrichtung Q in dem Gestell 89 angeordnet werden. In den jeweiligen Spuren S₁ bis S₄ geförderte Objekte 11 können so beispielsweise geradlinig in Förderrichtung R in ihren jeweiligen Spuren S an eine nachgeschaltete Funktionseinheit 17 übergeben werden.

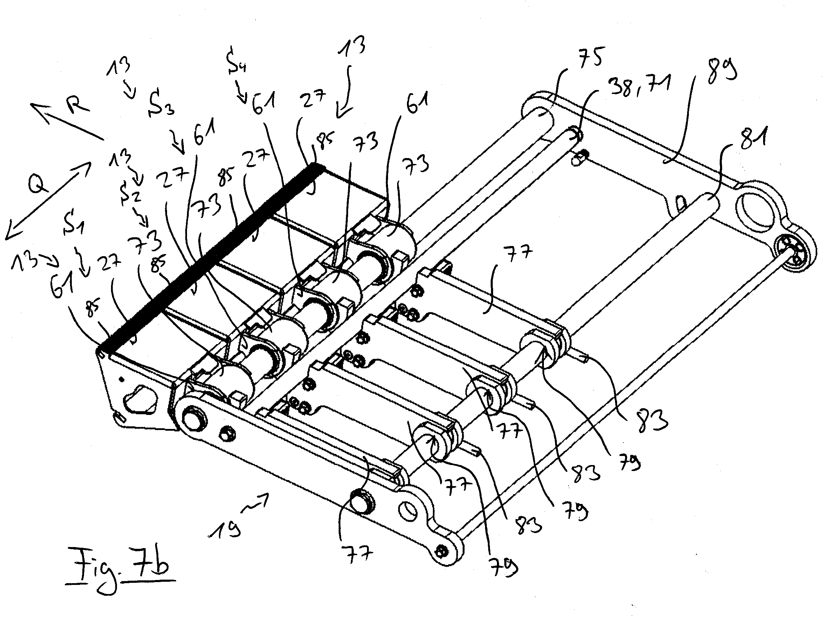

Ferner können die Fördereinrichtungen 13, wie Fig. 7b veranschaulicht, beispielsweise auf einer Seite des Gestells 89 bezüglich der Querrichtung Q angeordnet werden, um Objekte 11 an dieser Seite an die nachgeschaltete Funktionseinheit 17 zu übergeben. Solche Einstellungen können beispielsweise auch vorgesehen sein, um in den vier Spuren S₁ bis S₄ bewegte Objekte 11 an eine nachgeschaltete Funktionseinheit 17 mit beispielsweise acht Spuren S zu übergeben, ähnlich den in den Fig. 4b, 4d und 4f veranschaulichten Varianten eines Wechsels von zwei Spuren S₁ und S₂ auf vier Spuren S₁ bis S₄.

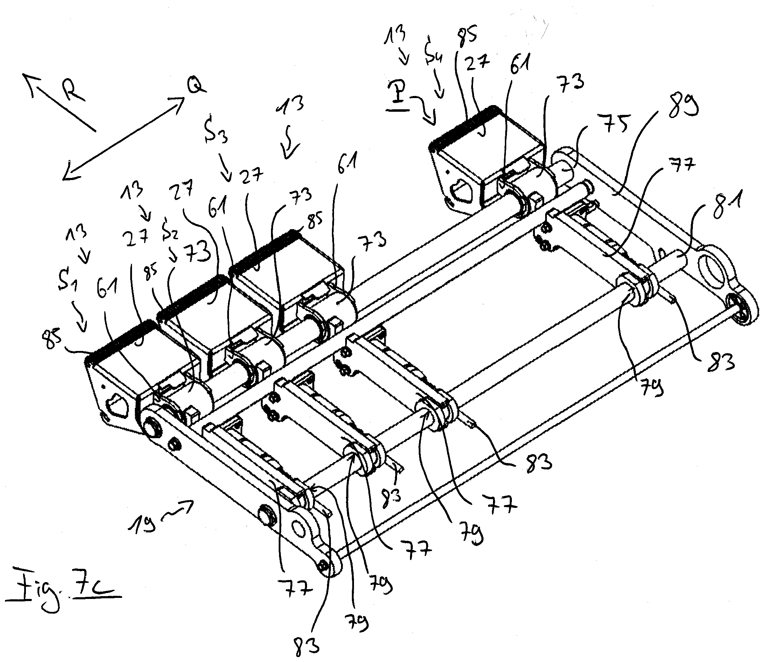

Ferner kann es vorgesehen sein, die Fördereinrichtung 13 einer momentan nicht genutzten Spur S₄ in eine Parkposition P zu verfahren und den Betrieb lediglich in den Spuren S₁ bis S₃ durchzuführen (vgl. Fig. 7c und 4d). Dadurch kann die Förderstrecke flexibel an bestimmte Betriebssituationen und eine jeweilige momentan genutzte Anzahl von Spuren S, beispielsweise zum Fördern von mittels eines Hochgeschwindigkeitssclicers von Lebensmittelprodukten abgetrennten Scheiben, eingestellt werden, ohne dass dazu ein Umbau der Förderstrecke F erforderlich ist.

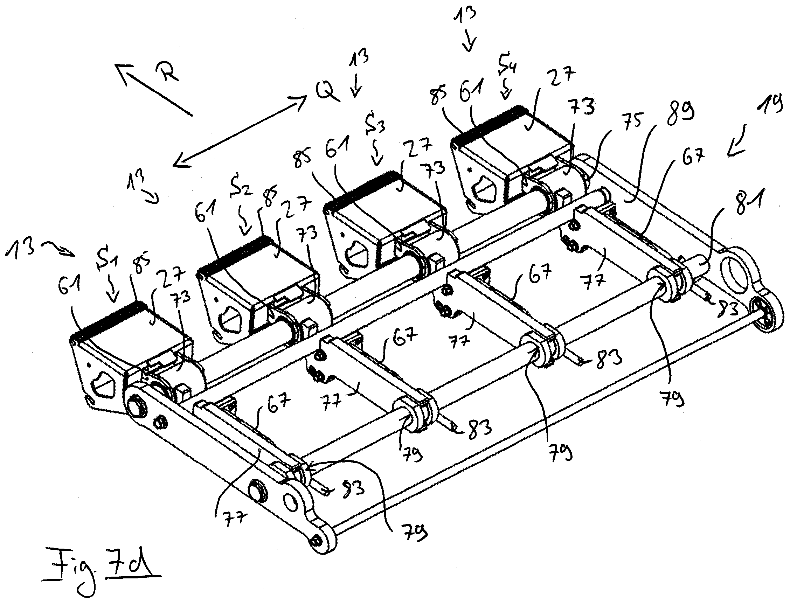

Darüber hinaus kann es vorgesehen sein, die Fördereinrichtungen 13 bzw. deren ausgangsseitigen Umlenkungen 27 in Querrichtung Q gleich beabstandet zueinander anzuordnen, um transportierte Objekte 11 beispielsweise in möglichst gro-ßem Abstand zueinander bezüglich der Querrichtung Q an eine nachgeschaltete Funktionseinheit 17 übergeben zu können (vgl. Fig. 7d).

Die erfindungsgemäße Fördereinrichtung 13 bietet folglich zahlreiche Einsatzmöglichkeiten und kann für eine Vielzahl von Anwendungen genutzt werden, wobei insbesondere die Möglichkeit geringfügiger und präzise ansteuerbarer Querverschiebungen zur Korrektur der Lage von Objekten 11 innerhalb ihrer Spur S dazu dienen kann, die Genauigkeit der Übergabe der Objekte 11 an nachgeschaltete Funktionseinheiten 17 und insbesondere das präzise Einlegen der Objekte in dafür vorgesehene Verpackungsplätze 49 bzw. Vertiefungen 53 an einer Materialbahn 51 einer Verpackungsmaschine 18 zu gewährleisten.

### Bezugszeichenliste

- 11: Objekt, Lebensmittelportion
- 13: Fördereinrichtung
- 15: Hochgeschwindigkeitsslicer
- 17: nachgeschaltete Funktionseinheit
- 18: Verpackungsmaschine
- 19: Verstelleinrichtung
- 23: Endlosförderband
- 25: Endlosförderriemen
- 27: ausgangsseitige Umlenkung
- 29: eingangsseitige Umlenkung
- 33: bewegbares Element, Läufer
- 35: Linearmotor
- 37: Stator
- 38: Führung
- 39: Kontrolleinrichtung
- 43: Sensor, Bildaufnahmeeinrichtung
- 45: Steuereinrichtung
- 47: Einleger
- 49: Verpackungsplatz
- 51: Materialbahn
- 53: Vertiefung
- 55: Portionierband
- 57: Antriebsmotor
- 59: Lagerung der Umlenkrollen
- 61: Kopplung
- 63: Puffer
- 65: Wippe
- 67: Servomotor
- 69: Verstellelement, Zahnrad
- 70: Zahnstangengetriebe
- 71: Führungseinrichtung, Zahnstange
- 73: Halterungsrolle
- 75: vordere Führungsstange
- 77: Übertragungsschiene
- 79: Halterungsausnehmung
- 81: hintere Führungsstange
- 83: Kabel
- 85: obere Rolle
- 87: untere Rolle
- 89: Gestell
- A: Arbeitsstrecke
- F: Förderstrecke
- P: Parkposition
- Q: Querrichtung
- R: Förderrichtung
- S: Spur

## Patentansprüche

1. Vorrichtung zum ein- oder mehrspurigen Fördern von Objekten (11) entlang einer sich in einer Förderrichtung (R) erstreckenden Förderstrecke (F), wobei die Förderstrecke (F) für zumindest eine Spur (S) wenigstens eine Fördereinrichtung (13) umfasst, die Objekte (11) eingangsseitig von einer vorgeschalteten Funktionseinheit (23) übernimmt und die Objekte (11) ausgangsseitig an eine nachgeschaltete Funktionseinheit (17) übergibt, und wobei die Fördereinrichtung (13) als Ganzes und/oder in einem ausgangsseitigen Endbereich mittels einer Verstelleinrichtung (19) quer zur Förderrichtung (R) derart verstellbar ist, dass die Querposition von zu übergebenden Objekten (11) innerhalb der jeweiligen Spur (S) verändert wird,
**dadurch gekennzeichnet, dass**
die Verstelleinrichtung (19) einen mit der Fördereinrichtung (13) gekoppelten Servomotor (67) zum Verstellen der Fördereinrichtung (13) umfasst, wobei der Servomotor (67) gemeinsam mit der Fördereinrichtung (13) in Querrichtung (Q) bewegbar ist.

2. Vorrichtung nach Anspruch 1,
wobei die Förderstrecke (F) mehrspurig ist und für jede Spur (S) eine Fördereinrichtung (13) umfasst, wobei die Fördereinrichtungen (13) nebeneinander angeordnet und unabhängig voneinander in Querrichtung (Q) verstellbar sind und/oder
wobei die Fördereinrichtung (13) ein umlaufendes Endlosfördermittel umfasst, insbesondere ein relativ breiteres Endlosförderband (23) oder eine Vielzahl von relativ schmaleren, nebeneinander angeordneten Endlosförderriemen (25), wobei mittels der Verstelleinrichtung (19) eine ausgangsseitige Umlenkung (27) für das Endlosfördermittel in Querrichtung (Q) verstellbar ist.

3. Vorrichtung nach Anspruch 1 oder 2,
wobei die Verstelleinrichtung (19) ein bewegbares Element (33) umfasst, das mit der Fördereinrichtung (13) gekoppelt ist, insbesondere mit einer ausgangsseitigen Umlenkung (27) eines Endlosfördermittels, insbesondere wobei das bewegbare Element der Verstelleinrichtung (19) als Läufer (33) eines Linearmotors (35) ausgebildet ist, insbesondere eines linearen Synchronmotors oder eines linearen Induktionsmotors, oder insbesondere wobei das bewegbare Element (33) mittels eines Servomotors (67) antreibbar ist und/oder einen Servomotor (67) umfasst.

4. Vorrichtung nach einem der vorhergehenden Ansprüche,
wobei der Servomotor (67) mit einer ausgangsseitigen Umlenkung (27) eines Endlosfördermittels gekoppelt ist.

5. Vorrichtung nach Anspruch 4,
wobei zwischen den Servomotor (67) und die Fördereinrichtung (13), insbesondere einer ausgangsseitigen Umlenkung (27) eines Endlosfördermittels, ein mittels des Servomotors (67) beaufschlagbares Zahnstangengetriebe (70) geschaltet ist, und/oder wobei der Servomotor (67) dazu ausgebildet ist, ein Verstellelement (69) rotatorisch anzutreiben, wobei das Verstellelement (69) in einer Führungseinrichtung (71) geführt ist, welche dazu ausgebildet ist, eine Rotationsbewegung des Verstellelements (69) in eine translatorische Bewegung des Servomotors (67) und der damit gekoppelten Fördereinrichtung (13) quer zu der Förderrichtung (R) zu überführen, insbesondere wobei das Verstellelement als Zahnrad (69) ausgebildet ist, welches in einer sich quer zu der Förderrichtung (R) erstreckenden Zahnstange (71) umläuft.

6. Vorrichtung nach einem der vorhergehenden Ansprüche,
wobei die Förderstrecke (F) mehrspurig ist und die Verstelleinrichtung (19) für jede Spur (S) einen Servomotor (67) umfasst.

7. Vorrichtung nach einem der Ansprüche 1 bis 6,
wobei die Verstelleinrichtung (19) einen Linearmotor (35) mit einem Stator (37) und einem mit der Fördereinrichtung (13) gekoppelten Läufer (33) umfasst,
und/oder wobei die Förderstrecke (F) mehrspurig ist und die Verstelleinrichtung (19) für jede Spur (S) einen Linearmotor (35) umfasst.

8. Vorrichtung nach einem der Ansprüche 1 bis 6,
wobei die Förderstrecke (F) mehrspurig ist und die Verstelleinrichtung (19) für alle Spuren (S₁, S₂, ..., Sₙ) einen gemeinsamen Linearmotor (35) umfasst, der für jede Spur (S) einen Läufer (33) umfasst,
insbesondere wobei der gemeinsame Linearmotor (35) einen gemeinsamen Stator (37) für die Läufer (33) umfasst, der sich in Querrichtung (Q) über alle Spuren (S₁, S₂, ..., Sₙ) hinweg erstreckt und an dem die jeweils einer der Spuren (S) zugeordneten Läufer (33) während ihrer jeweiligen Stellbewegung geführt sind,
und/oder insbesondere wobei der gemeinsame Linearmotor (35) für alle Läufer (33) einen gemeinsamen Stator (37) umfasst und derart ansteuerbar ist, dass die Läufer (33) unabhängig voneinander entlang des Stators (37) bewegbar sind.

9. Vorrichtung nach einem der vorhergehenden Ansprüche,
wobei eine Kontrolleinrichtung (39) vorgesehen ist, die dazu ausgebildet ist, die Querposition von Objekten (11) auf der Fördereinrichtung (13) und/oder auf einer der Fördereinrichtung (13) vorgeschalteten Funktionseinheit und/oder auf einer der Fördereinrichtung (13) nachgeschalteten Funktionseinheit (17) zu erfassen,
insbesondere wobei die Kontrolleinrichtung (39) zumindest einen Sensor (43) umfasst, der im Bereich der Fördereinrichtung (13) oder im Bereich der Funktionseinheit (17, 23) angeordnet ist und Informationen über die Querpositionen der Objekte (11) innerhalb der Spur (S) ermittelt,
und/oder insbesondere wobei die Kontrolleinrichtung (39), insbesondere als im Bereich der Fördereinrichtung (13) oder der Funktionseinheit (17, 23) angeordneten Sensor (43), eine Bildaufnahmeeinrichtung (43), insbesondere ein Kamerasystem oder eine Scaneinrichtung, umfasst, mittels der die Lage von Objekten (11) innerhalb einer Spur (S) und/oder simultan innerhalb mehrerer Spuren (S₁, S₂, ..., Sₙ) ermittelt werden kann,
und/oder insbesondere wobei die Kontrolleinrichtung (39) mehrere Sensoren (43) umfasst, die entlang der Förderstrecke (F) verteilt angeordnet sind, um die Lage von Objekten (11) an verschiedenen Orten zu ermitteln.

10. Vorrichtung nach Anspruch 9,
wobei eine Steuereinrichtung (45) vorgesehen ist, die dazu ausgebildet ist, in Abhängigkeit von den mittels der Kontrolleinrichtung (39) erfassten Querpositionen der Objekte (11) die Fördereinrichtung (13) mittels der Verstelleinrichtung (19) in Querrichtung (Q) zu verstellen,
insbesondere wobei die Steuereinrichtung (45) dazu ausgebildet ist, die Fördergeschwindigkeit der Fördereinrichtung (13) zu verändern, um die Längsposition der zu übergebenden Objekte (11) zu korrigieren.

11. Vorrichtung zum Handhaben von Objekten (11) entlang einer Arbeitsstrecke (A), mit
- einer Vorrichtung nach einem der vorhergehenden Ansprüche, deren die wenigstens eine Fördereinrichtung (13) umfassende Förderstrecke (F) einen Teil der Arbeitsstrecke (A) bildet,
- einer Kontrolleinrichtung (39), die dazu ausgebildet ist, die Querposition von Objekten (11) auf der Fördereinrichtung (13) oder auf einer der Fördereinrichtung (13) vorgeschalteten oder nachgeschalteten Funktionseinheit (17, 23, 47) zu erfassen, und
- einer Steuereinrichtung (45), die dazu ausgebildet ist, bei einer Abweichung der erfassten Querposition von einer Sollquerposition die Fördereinrichtung (13) in Querrichtung (Q) zu verstellen, um die Querposition von zu übergebenden Objekten (11) innerhalb der jeweiligen Spur (S) zu korrigieren.

12. Vorrichtung nach Anspruch 11,
wobei die Arbeitsstrecke (A) eine zumindest teilweise der Förderstrecke (F) nachgelagerte Verpackungsmaschine (18), insbesondere Tiefziehverpackungsmaschine, umfasst
insbesondere wobei die Fördereinrichtung (13) oder eine der Fördereinrichtung (13) nachgeschaltete Funktionseinheit (47), insbesondere ein Auflege- oder Einlegeband (47), dazu ausgebildet ist, die Objekte (11) von der Förderstrecke (F) aus an jeweils zugeordnete Verpackungsplätze (49) der Verpackungsmaschine (18) zu übergeben, insbesondere auf eine in der Verpackungsmaschine (18) transportierte Materialbahn (51) aufzulegen oder in Vertiefungen (53) einer in der Verpackungsmaschine (18) transportierten Materialbahn (51) einzulegen, wobei die Kontrolleinrichtung (39) insbesondere dazu ausgebildet ist, die Lage der Objekte (11) an den Verpackungsplätzen (49) und insbesondere relativ zu vorgegebenen Begrenzungen der Verpackungsplätze (49) zu erfassen.

13. Verfahren zum Handhaben von Objekten (11) entlang einer Arbeitsstrecke (A) unter Verwendung einer Vorrichtung nach einem der vorhergehenden Ansprüche und mit einer Kontrolleinrichtung (39), bei dem
- mittels der Kontrolleinrichtung (39) die Querposition von Objekten (11) auf der Fördereinrichtung (13) und/oder auf einer der Fördereinrichtung (13) vorgeschalteten und/oder auf einer der Fördereinrichtung nachgeschalteten Funktionseinheit (17, 23, 47) erfasst wird, und
- bei einer Abweichung der erfassten Querposition von einer vorgegebenen oder einer vorgebbaren Sollquerposition die Fördereinrichtung (13) in Querrichtung (Q) verstellt wird, um die Querposition der zu übergebenden Objekte (11) innerhalb der jeweiligen Spur (S) zu korrigieren,
insbesondere wobei die Steuereinrichtung (45) dazu ausgebildet ist, bei der Korrektur der Querpositionen der Objekte (11) eine Trendregelung durchzuführen.

## Claims

1. An apparatus for the single-track or multi-track conveying of objects (11) along a conveying path (F) extending in a conveying direction (R),
wherein the conveying path (F) for at least one track (S) comprises at least one conveying device (13) which takes over the objects (11) at an input side from a functional unit (23) connected upstream and which transfers the objects (11) at an output side to a functional unit (17) connected downstream; and
wherein the conveying device (13) as a whole and/or in an output-side end region is adjustable transversely to the conveying direction (R) by means of an adjustment device (19) such that the transverse position of objects (11) to be transferred is changed within the respective track (S),
**characterized in that**
the adjustment device (19) comprises a servomotor (67) for adjusting the conveying device (13) that is coupled to the conveying device (13),
wherein the servomotor (67) is movable together with the conveying device (13) in the transverse direction (Q).

2. An apparatus in accordance with claim 1,
wherein the conveying path (F) is of multi-track design and comprises a conveying device (13) for each track (S), with the conveying devices (13) being arranged next to one another and being adjustable independently of one another in a transverse direction (Q), and/or
wherein the conveying device (13) comprises a revolving endless conveyor means, in particular a relatively wider endless conveyor belt (23) or a plurality of relatively narrower endless conveyor bands (25) arranged next to one another, with an output-side deflector (27) for the endless conveyor means being adjustable in the transverse direction (Q) by means of the adjustment device (19).

3. An apparatus in accordance with claim 1 or claim 2,
wherein the adjustment device (19) comprises a movable element (33) which is coupled to the conveying device (13), in particular to an output-side deflector (27) of an endless conveyor means,
in particular wherein the movable element of the adjustment device (19) is configured as a rotor (33) of a linear motor (35), in particular of a linear synchronous motor or of a linear induction motor, or in particular wherein the movable element (33) is drivable by means of a servomotor (67) and/or comprises a servomotor (67).

4. An apparatus in accordance with any one of the preceding claims,
wherein the servomotor (67) is coupled to an output-side deflector (27) of an endless conveyor means.

5. An apparatus in accordance with claim 4,
wherein a rack and pinion gear (70) which can be acted on by means of the servomotor (67) is connected between the servomotor (67) and the conveying device (13), in particular an output-side deflector (27) of an endless conveyor means, and/or wherein the servomotor (67) is configured to drive an adjustment element (69) in a rotational manner, wherein the adjustment element (69) is guided in a guide device (71) which is configured to convert a rotary movement of the adjustment element (69) into a translatory movement of the servomotor (67) and of the conveying device (13) coupled thereto transversely to the conveying direction (R), in particular wherein the adjustment element is configured as a toothed wheel (69) which revolves in a gear rack (71) extending transversely to the conveying direction (R).

6. An apparatus in accordance with any one of the preceding claims,
wherein the conveying path (F) is of multi-track design and the adjustment device (19) comprises a servomotor (67) for each track (S).

7. An apparatus in accordance with any one of the claims 1 to 6,
wherein the adjustment device (19) comprises a linear motor (35) having a stator (37) and having a rotor (33) coupled to the conveying device (13), and/or wherein the conveying path (F) is of multi-track design and the adjustment device (19) comprises a linear motor (35) for each track (S).

8. An apparatus in accordance with any one of the claims 1 to 6,
wherein the conveying path (F) is of multi-track design and the adjustment device (19) comprises a common linear motor (35) for all the tracks (S₁, S₂, ..., Sₙ) that comprises a rotor (33) for each track (S),
in particular wherein the common linear motor (35) comprises a common stator (37) for the rotors (33) which extends in the transverse direction (Q) over all the tracks (S₁, S₂, ..., Sₙ) and at which the rotors (33), which are each associated with one of the tracks (S), are guided during their respective adjustment movement,
and/or in particular wherein the common linear motor (35) comprises a common stator (37) for all the rotors (33) and is controllable such that the rotors (33) are movable independently of one another along the stator (37).

9. An apparatus in accordance with any one of the preceding claims,
wherein a controlling device (39) is provided which is configured to detect the transverse position of objects (11) on the conveying device (13) and/or on a functional unit connected upstream of the conveying device (13) and/or on a functional unit (17) connected downstream of the conveying device (13),
in particular wherein the controlling device (39) comprises at least one sensor (43) which is arranged in a region of the conveying device (13) or in a region of the functional unit (17, 23) and which determines information on the transverse positions of the objects (11) within the track (S),
and/or in particular wherein the controlling device (39), in particular as a sensor (43) arranged in the region of the conveying device (13) or of the functional unit (17, 23), comprises an image recording device (43), in particular a camera system or a scanning device, by means of which the position of objects (11) within a track (S) and/or simultaneously within a plurality of tracks (S₁, S₂, ..., Sₙ) can be determined,
and/or in particular wherein the controlling device (39) comprises a plurality of sensors (43) which are arranged distributed along the conveying path (F) to determine the position of objects (11) at different locations.

10. An apparatus in accordance with claim 9,
wherein a control device (45) is provided which is configured to adjust the conveying device (13) in the transverse direction (Q) by means of the adjustment device (19) in dependence on the transverse positions of the objects (11) detected by means of the controlling device (39),
in particular wherein the control device (45) is configured to change the conveying speed of the conveying device (13) in order to correct the longitudinal position of the objects (11) to be transferred.

11. An apparatus for handling objects (11) along a work path (A), comprising
- an apparatus in accordance with any one of the preceding claims whose conveying path (F), comprising the at least one conveying device (13), forms a part of the work path (A);
- a controlling device (39) which is configured to detect the transverse position of objects (11) on the conveying device (13) or on a functional unit (17, 23, 47) connected upstream or connected downstream of the conveying device (13); and
- a control device (45) which is configured to adjust the conveying device (13) in the transverse direction (Q) in the case of a deviation of the detected transverse position from a desired transverse position in order to correct the transverse position of objects (11) to be transferred within the respective track (S).

12. An apparatus in accordance with claim 11,
wherein the work path (A) comprises a packaging machine (18), in particular a deep-draw packaging machine, which is at least partly arranged downstream of the conveying path (F),
in particular wherein the conveying device (13) or a functional unit (47) connected downstream of the conveying device (13), in particular a placement belt or insertion belt (47), is configured to transfer the objects (11) from the conveying path (F) to respective associated packaging spaces (49) of the packaging machine (18), in particular to place them onto a material web (51) transported in the packaging machine (18) or to insert them into recesses (53) of a material web (51) transported in the packaging machine (18), wherein the controlling device (39) is in particular configured to detect the position of the objects (11) at the packaging spaces (49) and in particular relative to predefined boundaries of the packaging spaces (49).

13. A method of handling objects (11) along a work path (A) using an apparatus in accordance with any one of the preceding claims and a controlling device (39), in which
- the transverse position of objects (11) on the conveying device (13) and/or on a functional unit (17, 23, 47) connected upstream of the conveying device (13) and/or connected downstream of the conveying device is detected by means of the controlling device (39); and
- the conveying device (13) is adjusted in the transverse direction (Q) in the case of a deviation of the detected transverse position from a predefined or predefinable desired transverse position in order to correct the transverse position of the objects (11) to be transferred within the respective track (S),
in particular wherein the control device (45) is configured to carry out a trend regulation when the transverse positions of the objects (11) are corrected.

## Revendications

1. Dispositif de transport d'objets (11), à une ou plusieurs voies, le long d'un trajet de transport (F) s'étendant dans une direction de transport (R),
dans lequel le trajet de transport (F) comprend, pour au moins une voie (S), au moins un système de transport (13) qui reçoit des objets (11) côté entrée depuis une unité fonctionnelle montée en amont (23) et qui transfère les objets (11) côté sortie à une unité fonctionnelle montée en aval (17), et
dans lequel le système de transport (13) peut être réglé dans son ensemble et/ou dans une zone d'extrémité côté sortie au moyen d'un système de réglage (19) transversalement à la direction de transport (R) de telle sorte que la position transversale des objets (11) à transférer est modifiée à l'intérieur de la voie (S) respective,
**caractérisé en ce que**
le système de réglage (19) comprend un servomoteur (67) couplé au système de transport (13) pour régler le système de transport (13),
dans lequel le servomoteur (67) peut être déplacé conjointement avec le système de transport (13) dans la direction transversale (Q).

2. Dispositif selon la revendication 1,
dans lequel le trajet de transport (F) est à plusieurs voies et comprend un système de transport (13) pour chaque voie (S), les systèmes de transport (13) étant agencés les uns à côté des autres et pouvant être réglés indépendamment les uns des autres dans une direction transversale (Q), et/ou
dans lequel le système de transport (13) comprend un moyen de transport sans fin, en particulier une bande transporteuse sans fin (23) relativement plus large ou une pluralité de courroies de transport sans fin relativement plus étroites agencées les unes à côté des autres, un renvoi (27) côté sortie pouvant être réglé au moyen du système de réglage (19) pour le moyen de transport sans fin dans la direction transversale (Q).

3. Dispositif selon la revendication 1 ou 2,
dans lequel le système de réglage (19) comprend un élément mobile (33) qui est couplé au système de transport (13), en particulier à un renvoi (27) côté sortie d'un moyen de transport sans fin,
en particulier dans lequel l'élément mobile du système de réglage (19) est réalisé comme rotor (33) d'un moteur linéaire (35), en particulier d'un moteur linéaire synchrone ou d'un moteur linéaire à induction, ou en particulier dans lequel l'élément mobile (33) peut être entraîné au moyen d'un servomoteur (67) et/ou comprend un servomoteur (67).

4. Dispositif selon l'une quelconque des revendications précédentes,
dans lequel le servomoteur (67) est couplé à un renvoi (27) côté sortie d'un moyen de transport sans fin.

5. Dispositif selon la revendication 4,
dans lequel un engrenage à crémaillère (70) pouvant être sollicité au moyen du servomoteur (67) est monté entre le servomoteur (67) et le système de transport (13), en particulier un renvoi (27) côté sortie d'un moyen de transport sans fin, et/ou dans lequel le servomoteur (67) est réalisé pour entraîner en rotation un élément de réglage (69), l'élément de réglage (69) étant guidé dans un système de guidage (71) qui est conçu pour convertir un mouvement de rotation de l'élément de réglage (69) en un mouvement de translation du servomoteur (67) et du système de transport (13) couplé à celui-ci transversalement à la direction de transport (R),
en particulier dans lequel l'élément de réglage est réalisé comme pignon (69) qui tourne dans une crémaillère (71) s'étendant transversalement à la direction de transport (R).

6. Dispositif selon l'une quelconque des revendications précédentes,
dans lequel le trajet de transport (F) est à plusieurs voies et le système de réglage (19) comprend un servomoteur (67) pour chaque voie (S).

7. Dispositif selon l'une quelconque des revendications 1 à 6,
dans lequel le système de réglage (19) comprend un moteur linéaire (35) avec un stator (37) et un rotor (33) couplé au système de transport (13), et/ou dans lequel le trajet de transport (F) est à plusieurs voies et le système de réglage (19) comprend un moteur linéaire (35) pour chaque voie (S).

8. Dispositif selon l'une quelconque des revendications 1 à 6,
dans lequel le trajet de transport (F) est à plusieurs voies et le système de réglage (19) comprend un moteur linéaire (35) commun pour toutes les voies (S₁, S₂, ... Sₙ),
en particulier dans lequel le moteur linéaire (35) commun comprend un stator (37) commun pour les rotors (33), qui s'étend dans la direction transversale (Q) sur toutes les voies (S₁, S₂, ... Sₙ) et le long duquel les rotors (33) associés à chacune des voies (S) sont guidés pendant leur mouvement de positionnement respectif,
et/ou en particulier dans lequel le moteur linéaire (35) commun pour tous les rotors (33) comprend un stator commun (37) et peut être piloté de telle sorte que les rotors (33) peuvent être déplacés indépendamment les uns des autres le long du stator (35).

9. Dispositif selon l'une quelconque des revendications précédentes,
dans lequel il est prévu un système de contrôle (39) qui est réalisé pour enregistrer la position transversale des objets (11) sur le système de transport (13) et/ou sur une unité fonctionnelle montée en en amont du système de transport (13) et/ou sur une unité fonctionnelle (17) montée en aval du système de transport (13),
en particulier dans lequel le système de contrôle (39) comprend au moins un capteur (43) qui est agencé au niveau du système de transport (13) ou au niveau de l'unité fonctionnelle (17, 23) et qui identifie des informations concernant les positions transversales des objets (11) à l'intérieur de la voie (S),
et/ou en particulier dans lequel le système de contrôle (39), en particulier en tant que capteur (43) agencé au niveau du système de transport (13) ou de l'unité fonctionnelle (17, 23), comprend un système de capture d'images (43), en particulier un système de caméra ou un système de scannage, au moyen duquel la position d'objets (11) à l'intérieur d'une voie (S) et/ou simultanément à l'intérieur de plusieurs voies (S₁, S₂, ... Sₙ) peut être identifiée,
et/ou en particulier dans lequel le système de contrôle (39) comprend plusieurs capteurs (43) qui sont agencés en étant répartis le long du trajet de transport (F) pour identifier la position d'objets (11) à différents endroits.

10. Dispositif selon la revendication 9,
dans lequel il est prévu un système de commande (45) qui est réalisé pour régler le système de transport (13) au moyen du système de réglage (19) dans la direction transversale (Q), en fonction des positions transversales des objets (11) enregistrées au moyen du système de contrôle (39),
en particulier dans lequel le système de commande (45) est réalisé pour modifier la vitesse de transport du système de transport (13) afin de corriger la position longitudinale des objets (11) à transférer.

11. Dispositif de manutention d'objets (11) le long d'un trajet de travail (A), comprenant
- un dispositif selon l'une quelconque des revendications précédentes, dont le trajet de transport (F) comprenant au moins un système de transport (13) forme une partie du trajet de travail (A),
- un système de contrôle (19) qui est réalisé pour enregistrer la position transversale d'objets (11) sur le système de transport (13) ou sur une unité fonctionnelle (17, 23, 47) montée en amont ou en aval du système de transport (13), et
- un système de commande (45) qui est réalisé pour régler le système de transport (13) dans la direction transversale (Q) dans le cas d'un écart de la position transversale enregistrée par rapport à une position transversale de consigne afin de corriger la position transversale des objets à transférer (11) à l'intérieur de la voie (S) respective.

12. Dispositif selon la revendication 11,
dans lequel le trajet de travail (A) comprend une machine de conditionnement (18), en particulier une machine de conditionnement thermoformeuse, montée en aval du trajet de transport (F), au moins en partie,
en particulier dans lequel le système de transport (13) ou une unité fonctionnelle (47) montée en aval du système de transport (13), en particulier une bande d'amenée ou de dépose (47), est réalisé(e) pour transférer les objets (11) depuis le trajet de transport (F) jusqu'à des emplacements de conditionnement (49) respectivement associés de la machine de conditionnement (18), en particulier pour les amener sur une bande de matériau (51) transportée dans la machine de conditionnement (18) ou pour les déposer dans des évidements (53) d'une bande de matériau (51) transportée dans la machine de conditionnement (18), le système de contrôle (39) étant en particulier réalisé pour enregistrer la position des objets (11) au niveau des emplacements de conditionnement (49) et en particulier relativement à des délimitations données des emplacements de conditionnement (49).

13. Procédé de manutention d'objets (11) le long d'un trajet de travail (A) en utilisant un dispositif selon l'une quelconque des revendications précédentes et avec un système de contrôle (39), comprenant les étapes consistant à :
- identifier, au moyen du système de contrôle (39), la position transversale d'objets (11) sur le système de transport (13) et/ou sur une unité fonctionnelle (17, 23, 47) montée en amont du système de transport (13) et/ou en aval du système de transport, et
- dans le cas d'un écart de la position transversale enregistrée par rapport à une position transversale de consigne donnée ou susceptible d'être donnée, régler le système de transport (13) dans la direction transversale (Q) pour corriger la position transversale de objets (11) à transférer à l'intérieur de la voie (S) respective,
en particulier dans lequel le système de commande (45) est réalisé pour effectuer une régulation de tendance lors de la correction des positions transversales des objets (11).
